(19) Europäisches Patentamt
European Patent Office
Office européen des brevets

(11) **EP 3 094 499 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(21) Anmeldenummer: **15700085.2**

(22) Anmeldetag: **09.01.2015**

(51) Int Cl.:
*B60B 5/02* *(2006.01)*    *B60B 37/06* *(2006.01)*
*B60B 35/02* *(2006.01)*    *B60B 35/04* *(2006.01)*
*F16C 3/02* *(2006.01)*    *B61F 9/00* *(2006.01)*
*B60B 17/00* *(2006.01)*

(86) Internationale Anmeldenummer:
**PCT/EP2015/000026**

(87) Internationale Veröffentlichungsnummer:
**WO 2015/106958 (23.07.2015 Gazette 2015/29)**

(54) **RADSATZWELLE UND RADSATZ SOWIE VERFAHREN ZU IHRER HERSTELLUNG**

WHEEL SET SHAFT AND WHEEL SET, AND METHOD FOR PRODUCING SAME

ARBRE D'ESSIEU ET ESSIEU AINSI QUE PROCÉDÉ DE FABRICATION DE CEUX-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2014 DE 102014000641**

(43) Veröffentlichungstag der Anmeldung:
**23.11.2016 Patentblatt 2016/47**

(73) Patentinhaber: **Innotec Lightweight Engineering & Polymer Technology GmbH**
**38642 Goslar (DE)**

(72) Erfinder: **HUFENBACH, Werner**
**01324 Dresden (DE)**

(74) Vertreter: **Wallinger, Michael**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
DE-A1- 19 506 678    FR-A- 729 786
JP-A- S57 209 402    US-A1- 2011 231 039

EP 3 094 499 B1

**Beschreibung**

Die Räder von Schienenfahrzeugen bestehen üblicherweise aus Stahl, wobei ihr Aufbau - je nach Verwendung - unterschiedlich sein kann. Sie werden von einer quer zur Fahrtrichtung angeordneten Radsatzwelle (im Folgenden teilweise auch nur kurz als "Welle" bezeichnet), welche am Fahrwerk des Schienenfahrzeugs gelagert ist, gehalten. Je nach Anwendung sind auf dieser Welle Bremseinrichtungen, insbesondere Bremsscheiben, und Antriebsräder, insbesondere Zahnräder, vorgesehen. Die gesamte Einheit, bestehend aus Rädern, Welle und ggf. Bremsen und dergleichen, wird als Radsatz bezeichnet.

Da der Radsatz die Verbindung zwischen dem Fahrwerk des Schienenfahrzeugs und der Schiene herstellt, ist er sehr hohen Belastungen ausgesetzt, die insbesondere aus den vertikalen Stützkräften, den Seitenführungskräften, aber auch aus den Antriebs- und Bremsmomenten resultieren. Das Versagen eines Radsatzes kann - insbesondere bei Schienenfahrzeugen, die mit hohen Geschwindigkeiten verkehren - zu schweren und schwersten Unfällen führen. Der konstruktiven Gestaltung der Radsätze ist deshalb seit jeher große Aufmerksamkeit gewidmet worden.

Herkömmliche Radsatzwellen bestehen üblicherweise aus einer massiven oder hohlgebohrten Stahlwelle, auf der Aufnahmebereiche angeordnet sind, auf denen mittels einer formschlüssigen und/oder kraftschlüssigen Verbindung die Räder, Bremsscheiben, Lager und Antriebsräder angeordnet sind.

Die Radsätze und die Verbindungssysteme, die zur formschlüssigen und/oder kraftschlüssigen Verbindung mit den Rädern, den Bremsscheiben usw. dienen, werden derzeit in Europa insbesondere nach den Normen EN 13103 und EN 13104 ausgelegt.

Wie die Erfahrungen der letzten Jahre zeigen, werden die in diesen Normen beschriebenen Beanspruchungszustände den tatsächlichen im Fahrbetrieb auftretenden Belastungen, insbesondere bei Hochgeschwindigkeitszügen, aber nicht immer gerecht.

Dies ist darin begründet, dass bei den Radsatzwellen dieser Hochgeschwindigkeitszüge erhebliche Umlaufbiegebelastungen auftreten, die hochfrequente Torsionsschwingungen induzieren. Als Folge dieser Belastungen erfüllen viele Radsätze, und insbesondere dort die Radsatzwellen, nicht das Kriterium der Dauerfestigkeit. Unter dem Begriff "Dauerfestigkeit" wird hier - wie üblich - die Belastung verstanden, die der Werkstoff des Radsatzes bzw. insbesondere der Radsatzwelle über einen langen Zeitraum ohne Ermüdungserscheinungen ertragen kann.

Eine nicht dauerfeste Auslegung der Radsatzwellen führt dazu, dass sich in den hochbelasteten Bereichen zunächst kleine Risse bilden, die sich vergrößern und schließlich zum Totalausfall der Welle bzw. des Radsatzes führen können. Da das Totalversagen eines Radsatzes, wie eingangs erwähnt, zu erheblichen Unfällen führen kann, müssen die Radsätze bzw. die Radsatzwellen in kurzen Abständen auf Rissbildung untersucht werden. Die dazu erforderlichen Messverfahren, üblicherweise Ultraschall- oder Röntgenverfahren, sind sehr zeitaufwändig und führen zu langen Standzeiten der Schienenfahrzeuge, was deren Wirtschaftlichkeit erheblich herabsetzt.

Derzeit eingesetzte Radsatzwellen bzw. Radsätze müssen also aufgrund ihrer hohen Sicherheitsrelevanz häufig inspiziert und gewartet werden. Diese "diskontinuierliche" Zustandsüberwachung ist aufwändig und bedarf zahlreicher zeit- und kostenintensiver Prüfverfahren.

Der erste Gedanke bei einer derartigen Situation besteht darin, die Dauerfestigkeit durch eine entsprechend größere Dimensionierung der Radsätze zu erhöhen. Dem steht aber entgegen, dass dadurch nicht nur der Materialverbrauch steigt, sondern dass insbesondere die ungefederten Massen erhöht werden, was seinerseits zu einem erhöhten Verschleiß an Schiene und Radsatz führt und die Betriebssicherheit dadurch wiederum herabsetzt.

Ein möglicher Lösungsansatz besteht in der permanenten Zustandsüberwachung des Radsatzes durch Sensorik und Aktorik. Ansätze, wie sie in DE 10 2004 033 432, DE 10 2006 001 540 83 und DE 10 2009 053 801 beschrieben werden, gehen jedoch bereits von einer makroskopischen Schädigung des Radsatzes aus, indem eine mechanische Schwingung, induziert durch das ungleichmäßige Abrollverhalten des Radkranzes, ausgewertet wird.

Aus der JP S57-209402 A ist weiterhin eine Radsatzwelle für ein Schienenfahrzeug mit einem Kern aus Metall bekannt, welcher mit einem Material überzogen ist, in welchem Karbonfasern laminiert sind. Dadurch sollen die Fähigkeit der Absorption von Vibrationen verbessert und die Materialermüdung verringert werden.

Der vorliegenden Erfindung liegt die Aufgabe zugrunde, eine verbesserte Radsatzwelle für Schienenfahrzeuge, zu schaffen; einen Radsatz, der mit dieser Radsatzwelle ausgerüstet ist; ein Verfahren zum Herstellen einer solchen Radsatzwelle; sowie ein Verfahren zum Überwachen der Radsatzwelle.

Diese Aufgabe wird erfindungsgemäß durch eine Radsatzwelle gemäß Anspruch 1 gelöst. Ein Radsatz mit einer solchen Radsatzwelle ist Gegenstand des Anspruchs 12. Ein Verfahren zum Herstellen einer solchen Radsatzwelle ist Gegenstand des Anspruchs 13. Ein Verfahren zum Überwachen des Radsatzes ist Gegenstand des Anspruchs 14.

Zu bevorzugende Weiterbildungen der Erfindung sind Gegenstand der Unteransprüche.

Die Erfindung beschreitet einen neuen Weg zur Gestaltung von Radsätzen für Schienenfahrzeuge. Statt der bislang üblichen Radsatzwelle aus Stahl wird nunmehr eine Radsatzwelle aus einem faserverstärkten Material, insbesondere einem faserverstärkten Kunststoffmaterial, vorgeschlagen, die derart gestaltet ist, dass sie auch höchste Beanspruchungen dauerfest erträgt und zudem - bei entsprechender Ausgestaltung der Erfindung, wie sie in den Unteransprüchen und der Beschreibung beschrieben ist - auch die Möglichkeit bietet, auftretende Belastungen, aber auch mögliche Schäden an der Radsatzwelle bzw. dem Radsatz zuverlässig zu erkennen.

Dadurch können die Inspektionsintervalle gegenüber den heute bei Radsatzwellen aus Stahl üblichen erheblich verlängert werden, ohne dass hierdurch die durch die Erfindung erhöhte Betriebssicherheit des Schienenfahrzeugs wieder vermindert wird.

Die Erfindung eröffnet durch den Einsatz des faserverstärkten Materials in Verbindung mit darin eingebetteten Funktionsschichten zur Zustandsüberwachung Möglichkeiten zu einer permanenten Zustandsüberwachung und/oder zu einer vereinfachten diskontinuierlichen Zustandsüberwachung durch den Wechsel auf alternative zeit- und kosteneffiziente Prüfverfahren.

Die erfindungsgemäße Radsatzwelle bzw. der erfindungsgemäße Radsatz bietet ferner bei entsprechender Ausgestaltung die Möglichkeit, das Gewicht des Radsatzes gegenüber herkömmlichen Radsätzen zu reduzieren, wodurch die Fahrdynamik verbessert, der Verschleiß von Schienenrad und Schiene vermindert sowie der Energieverbrauch verringert wird.

Es sei ferner hervorgehoben, dass der erfindungsgemäße Radsatz bei entsprechender Ausgestaltung auch zu einer deutlich geringeren Schallabstrahlung und damit Geräuschbelastung führen kann, als dies bei herkömmlichen Radsätzen mit einer Radsatzwelle aus Stahl der Fall ist.

Weiterhin tragen die Fasern des zweiten Werkstoffs bei entsprechend gewählter Orientierung auch zur Schwingungsdämpfung bei.

Ein Radsatz im Sinne der Erfindung ist eine Baugruppe , welche, jedoch nicht unbedingt ausschließlich, eine Welle und wenigstens zwei Räder aufweist, wobei die Baugruppe einerseits zum Kontakt mit einer Fahrfläche, insbesondere einem Schienenstrang, dient und andererseits an einem Schienenfahrzeug, befestigt werden kann. Die Erfindung wird im Folgenden anhand eines Radsatzes mit genau zwei Rädern beschrieben, wobei dies jedoch nicht als Einschränkung zu verstehen ist.

Die Welle ist gegenüber dem Fahrzeug um ihre Längsachse drehbar gelagert.

Die Welle dient der drehfesten, insbesondere kraftschlüssigen, formschlüssigen und/oder stoffschlüssigen, und ggf. auch elektrisch leitenden Verbindung mit den Rädern. Die Räder dienen zum Abrollen auf einer Fahrfläche, insbesondere auf einer Schiene. Vorzugsweise dienen die Räder auch zur Stromleitung zwischen der Welle und der Fahrfläche, insbesondere der Schiene.

Bei elektrisch betriebenen Schienenfahrzeugen kann es vorgesehen sein, dass zumindest zeitweise ein elektrischer Strom aus dem Fahrzeug über eine Bremsscheibe in die Welle, durch die Welle in Richtung zumindest eines dieser Räder und durch dieses Rad in eine der Schienen fließt, insbesondere, um einen geschlossenen Stromkreis für den Fahrstrom herzustellen, welchen das Schienenfahrzeug im Allgemeinen über eine Oberleitung bezieht. Zu diesem Zweck ist vorzugsweise zumindest eines dieser Räder, besonders bevorzugt beide Räder, elektrisch leitend mit der Welle, insbesondere mit einem dieser Wellenkörper verbunden.

Unter einem Wellenkörper im Sinne der Erfindung ist eine Baugruppe der Welle oder aber auch die gesamte Welle zu verstehen. Der Wellenkörper erstreckt sich entlang einer Längsachse, insbesondere entlang der Längsachse der Welle, welche im Allgemeinen mit der Rotationsachse der Welle zusammenfällt. Der Wellenkörper ist dazu vorgesehen, in dem Radsatz mit wenigstens einem dieser Funktionsbauteile, insbesondere mit einem der Räder, insbesondere kraftschlüssig, formschlüssig und/oder stoffschlüssig und ggf. auch elektrisch leitend verbunden zu sein.

Erfindungsgemäß besteht der Wellenkörper zumindest teilweise aus wenigstens einem, insbesondere aushärtbaren, ersten Werkstoff, in welchem wenigstens teilweise Fasern aus einem im Wesentlichen nicht-metallischen zweiten Werkstoff zumindest teilweise eingebettet sind.

Der erste Werkstoff dient insbesondere dem Zusammenhalt des zweiten Werkstoffs. Vorzugsweise ist der erste Werkstoff einer Gruppe von Werkstoffen entnommen, welche aufweist: Polymere, Polyetheretherketon, Polyphenylensulfid, Polysulfon, Polyetherimid, Polytetrafluorethen, Epoxidharz, ungesättigtes Polyesterharz, Vinylesterharz, Phenol-Formaldehydharz, Diallylphthalatharz, Methacrylatharz, Polyurethan, Aminoharz, Melaminharz, Harnstoffharz, Nicht-Eisen-Metalle und oxidkeramische Werkstoffe.

Vorzugsweise ist der erste Werkstoff bei erhöhter Temperatur aushärtbar, besonders bevorzugt bei einer Temperatur oberhalb der für den Betrieb der Welle vorgesehenen Maximaltemperatur. Diese bevorzugte Ausgestaltung bietet die Vorteile verbesserter Temperaturbeständigkeit und erhöhter Stabilität des ersten Werkstoffs.

Erfindungsgemäß weist der erste Werkstoff zumindest teilweise Fasern aus einem im Wesentlichen nichtmetallischen zweiten Werkstoff auf. Diese Fasern dienen insbesondere der Übertragung von Kräften. Vorzugsweise sind diese Fasern ausgebildet als Kohlenstofffasern, Glasfasern, Aramidfasern, Keramikfasern und/oder Basaltfasern.

Nachfolgend werden zu bevorzugende Ausgestaltungen bzw. Ausführungsformen der Erfindung beschrieben.

Vorzugsweise sind die Fasern als, insbesondere schlauchförmiges, Geflecht, Gewebe oder als Gelege ausgebildet. Vorzugsweise weist die Körperwandung des Wellenkörpers bereichsweise mehrere Lagen oder unterschiedlich viele Lagen mit Fasern auf. Diese bevorzugte Ausgestaltung bietet den Vorteil erhöhter Stabilität, Festigkeit bzw. Biegesteifigkeit der Körperwandung.

Unter einer Körperwandung im Sinne der Erfindung ist die Wand bzw. der Wandbereich des Wellenkörpers zu verstehen, welche bzw. welcher insbesondere der Aufnahme von Kräften und/oder Drehmomenten aus den Rädern und/oder aus der Masse des Fahrzeugs dient. Vorzugsweise ist die Körperwandung entlang der Längsachse der Welle bzw. des Wellenkörpers, welche im Allgemeinen mit deren bzw. dessen Rotationsachse zusammenfällt, an die örtlich und/oder zeitlich auftretenden Kräfte oder Drehmomente mittels lokal verschiedener Wandstärken angepasst.

In einer besonders bevorzugten Ausführung der Erfindung ist dieser Wellenkörper rotationssymmetrisch zu seiner Längsachse gestaltet und weist eine Körperwandung auf, welche einen vorzugsweise mit Luft gefüllten Hohlraum umschließt.

Unter einem Längsabschnitt im Sinne der Erfindung ist ein im Wesentlichen zylindrischer und vorzugsweise hohlzylindrischer Abschnitt des Wellenkörpers zu verstehen. Der Längsabschnitt dient insbesondere zur Übertragung eines Kraft- bzw. eines Drehmoments zwischen zwei dieser Lastkopplungsabschnitte. Vorzugsweise ist die Wandstärke des Längsabschnitts entlang der Längsachse des Wellenkörpers im Wesentlichen gleichförmig. Der Außendurchmesser des Längsabschnitts wird vorliegend auch erster Außendurchmesser genannt. Vorzugsweise weist der Wellenkörper mehrere dieser Längsabschnitte auf.

Unter einem Lastkopplungsabschnitt im Sinne der Erfindung ist insbesondere ein Abschnitt des Wellenkörpers zu verstehen, welcher zum Einleiten und/oder Ausleiten einer Kraft und/oder eines Drehmoments in ein bzw. aus einem Funktionsbauteil dient. Der Lastkopplungsabschnitt ist zu diesem Zweck mit dem nicht dem Wellenkörper zugehörigen Funktionsbauteil verbunden. Der Außendurchmesser des Lastkopplungsabschnitts wird vorliegend auch zweiter Außendurchmesser genannt. Vorzugsweise ist der zweite Außendurchmesser an einen Lochkreis oder einen Innendurchmesser eines dieser Funktionsbauteile angepasst. Vorzugsweise weist der Wellenkörper mehrere Lastkopplungsabschnitte auf.

Vorzugsweise weist dieser Wellenkörper wenigstens einen Längsabschnitt auf, wobei der erste Außendurchmesser des Längsabschnitts im Wesentlichen konstant ist und wobei dieser erste Lastkopplungsabschnitt einen anderen, vorzugsweise einen größeren, zweiten Außendurchmesser aufweist als dieser Längsabschnitt.

Unter einem Funktionsbauteil im Sinne der Erfindung ist eine Einrichtung zu verstehen, welche insbesondere zur Übertragung von Drehmomenten bzw. Kräften auf die Welle bzw. deren Wellenkörper dient, insbesondere beim Verzögern und/oder Beschleunigen des Wellenkörper bzw. des Fahrzeugs. Gemäß einer bevorzugten Ausgestaltung ist ein Funktionsbauteil ausgebildet als ein Bauteil einer Bremseinrichtung, insbesondere als eine Scheibe einer Scheibenbremse, welche insbesondere der Verringerung der Drehzahl des Wellenkörpers dient. Weiter dient die Bremsscheibe der elektrischen Kontaktierung der Welle. Gemäß einer weiteren bevorzugten Ausgestaltung ist ein Funktionsbauteil ausgebildet als Lasteinleitungselement, welches insbesondere der Erhöhung der Drehzahl des Wellenkörpers dient, d. h. eine Antriebseinrichtung, insbesondere eine Antriebszahnradeinrichtung. Eine weitere bevorzugte Ausgestaltung eines Funktionsbauteils ist ein Radsatzwellenlager. Auch ein Schienenrad ist ein Funktionsbauteil im vorliegenden Sinne.

Vorzugsweise weist der Wellenkörper weiterhin einen zweiten Lastkopplungsabschnitt auf. Weiter weist der Wellenkörper ein erstes Ende und ein diesem ersten Ende gegenüberliegendes zweites Ende auf. Auch dieser zweite Lastkopplungsabschnitt dient der Verbindung mit einem Funktionsbauteil, insbesondere mit einem Rad. Vorzugsweise sind der erste Lastkopplungsabschnitt im Bereich des ersten Endes und der zweite Lastkopplungsabschnitt im Bereich des zweiten Endes des Wellenkörpers angeordnet.

Vorzugsweise weist der Wellenkörper mehrere, vorzugsweise drei, vier oder fünf dieser Lastkopplungsabschnitte auf, welche an verschiedenen Positionen entlang der Längsachse des Wellenkörpers angeordnet sind.

Vorzugsweise dient der erste Lastkopplungsabschnitt zur Verbindung mit einem ersten Rad und der zweite Lastkopplungsabschnitte zur Verbindung mit einem zweiten Rad. Vorzugsweise entspricht dabei der Abstand zwischen dem ersten und dem zweiten Lastkopplungsabschnitt im Wesentlichen der Spurweite einer Gleisstrecke.

Vorzugsweise ist zwischen dem ersten und dem zweiten Lastkopplungsabschnitt wenigstens ein dritter Lastkopplungsabschnitt angeordnet. Vorzugsweise dient der dritte Lastkopplungsabschnitt zur Verbindung mit einem Funktionsbauteil. Vorzugsweise ist dieses Funktionsbauteil als Lasteinleitungselement, als Bremsscheibe oder als Radsatzwellenlager ausgebildet.

Vorzugsweise dient jeder Lastkopplungsabschnitt zur Verbindung mit einem jeweiligen Funktionsbauteil.

Vorzugsweise weist die Radsatzwelle wenigstens zwei Wellenkörper auf, die in axialer Richtung der Radsatzwelle nebeneinander angeordnet sind.

Besonders vorzugsweise ist in dieser Ausführung für jedes Paar aus einem ersten und einem zweiten Wellenkörper, welche axial zueinander benachbart angeordnet sind und welche jeweils ein erstes Ende und ein zweites, dem ersten Ende gegenüberliegendes Ende aufweisen, zwischen dem ersten und dem zweiten Wellenkörper ein Lastkopplungsabschnitt derart angeordnet, dass dieser Lastkopplungsabschnitt im Bereich des zweiten Endes des ersten Wellenkörpers und im Bereich des ersten Endes des zweiten Wellenkörpers angeordnet ist.

Vorzugsweise weist der Wellenkörper, insbesondere die Körperwandung des Wellenkörpers, zumindest eine Funktionseinrichtung auf. Zumindest eine dieser Funktionseinrichtungen ist dazu geeignet, einen oder mehrere Betriebsparameter dieser Radsatzwelle, zumindest eines dieser Wellenkörper, zumindest eines dieser Räder oder dieses Radsatzes zu erfassen.

Unter einem Betriebsparameter im Sinne der Erfindung ist ein Parameter zu verstehen, welcher einen Rückschluss auf einen, insbesondere eines normalen, eines ungeplanten und/oder eines unerwünschten, Betriebszustand der Welle, zumindest eines dieser Wellenkörper, zumindest eines dieser Räder oder dieses Radsatzes gestattet.

Ein Betriebsparameter ist vorzugsweise durch einen oder mehrere Messfühler, Sensoren oder Detektoren feststellbar, wobei der Messfühler zumindest zeitweise ein Signal zur Verfügung stellt, vorzugsweise eine elektrische Spannung oder einen elektrischen Strom.

Weiterhin kann ein Betriebsparameter vorzugsweise von einer Steuereinrichtung verarbeitet und insbesondere mit einem Zielwert, insbesondere mit einem anderen erfassten Betriebsparameter, verknüpft werden.

Betriebsparameter sind beispielsweise die Drehzahl, Winkelbeschleunigung, Vibration, Temperatur, Feuchtigkeit, Dehnung, Stauchung, Biegung, Torsion, Elastizität oder Rissfreiheit der Welle, eines Wellenkörpers, eines Rades oder des Radsatzes.

Ein bestimmter Wert oder ein Wertebereich eines Betriebsparameters kann eine Überführung der Welle, eines Wellenkörper, eines Rades oder des Radsatzes in einen anderen Betriebszustand erforderlich machen oder sinnvoll erscheinen lassen.

Vorzugsweise weist die Körperwandung zumindest eine oder mehrere Trageinrichtungen auf. Eine Trageinrichtung ist dazu vorgesehen, zumindest eine dieser Funktionseinrichtungen abzustützen. Weiter dient eine Trageinrichtung zur Aufnahme von Kräften aus zumindest einem dieser Räder und/oder aus der Masse des Fahrzeugs. Eine Trageinrichtung weist diesen ersten Werkstoff sowie zumindest teilweise Fasern aus diesem zweiten Werkstoff auf. Diese bevorzugte Ausgestaltung bietet den Vorteil, dass der Zusammenhalt bzw. die Dauerhaltbarkeit der Funktionseinrichtung, insbesondere gegenüber Vibrationen aus dem Betrieb des Wellenkörpers bzw. Radsatzes, verbessert ist.

Unter "Abstützen" im Sinne der Erfindung ist zu verstehen, dass die Trageinrichtung einer unerwünschten Relativbewegung der Funktionseinrichtung gegenüber den übrigen Teilen des Wellenkörpers bzw. der Welle entgegenwirkt, vorzugsweise mittels einer stoffschlüssigen Verbindung zwischen der Trageinrichtung und der Funktionseinrichtung.

Vorzugsweise weist die Körperwandung zumindest zwei dieser Trageinrichtungen auf, wobei die zumindest eine Funktionseinrichtung zwischen diesen Trageinrichtungen angeordnet ist. Diese bevorzugte Ausgestaltung bietet den Vorteil, dass der Zusammenhalt der Funktionseinrichtung bzw. deren Dauerhaltbarkeit insbesondere bei Vibrationen aus dem Betrieb des Wellenkörpers verbessert ist.

Vorzugsweise weist die Körperwandung einen Bereich mit einer insbesondere metallischen Funktionsschicht auf, die z. B. als Einlegebauteil ausgebildet ist. Diese Funktionsschicht bzw. dieses Einlegebauteil dient insbesondere:

- der Erhöhung der mechanischen Belastbarkeit der Körperwandung, insbesondere der zulässigen Flächenpressung der Körperwandung, und/oder

- der elektrischen Kontaktierung eines dieser Räder oder eines dieser Funktionsbauteile und/oder

- der elektrischen Kontaktierung einer Funktionseinrichtung aus der Umgebung der Welle und/oder

- der elektrischen Verbindung einer Funktionseinrichtung mit einem dieser Funktionsbauteile oder einem dieser Räder und/oder

- dem Schutz der Trageinrichtung gegenüber mechanischer Beanspruchung aus der Umgebung der Welle.

Vorzugsweise ist diese Funktionsschicht oder dieses Einlegebauteil Teil einer dieser Trageinrichtungen. Diese bevorzugte Ausgestaltung bietet den Vorteil, dass die Festigkeit bzw. die Steifigkeit dieser Trageinrichtung erhöht ist.

Vorzugsweise ist das Einlegebauteil ausgebildet als Verschleißschutz, Auflagefläche, elektrische Kontaktfläche, Vertiefung, Vorsprung, Stecker oder Buchse. Vorzugsweise wird das Einlegebauteil der Trageinrichtung vor dem Aushärten des ersten Werkstoffs zugeführt, besonders bevorzugt in die Trageinrichtung eingelegt. Diese bevorzugte Ausgestaltung bietet den Vorteil, dass von der Trageinrichtung weitere Funktionen für den einwandfreien Betrieb des Fahrzeugs erfüllt werden können.

Vorzugsweise weisen eines dieser oder beide Räder je eine so genannte Radscheibe auf. Die Radscheiben sind mit der Welle bzw. einem dieser Wellenkörper insbesondere stoffschlüssig, kraftschlüssig, formschlüssig und/oder elektrisch leitend verbunden.

Unter einer Radscheibe im Sinne der Erfindung ist eine rotationssymmetrische und mit einem dieser Wellenkörper, insbesondere mit einem von dessen Lastkopplungsabschnitten, insbesondere stoffschlüssig, kraftschlüssig und/oder formschlüssig, verbundenes Element zu verstehen, welches insbesondere

- der Aufnahme von Kräften aus der Masse bzw. der Bewegung des Fahrzeugs dient,

- zum Abstützen eines dieser Radreifen und zum Beabstanden dieses Radreifens von diesem Wellenkörper dient,

- ggf. der elektrischen Verbindung mit der Welle bzw. deren Wellenkörper dient.

Vorzugsweise weisen eines dieser oder beide Räder je einen, insbesondere metallischen, Radreifen auf. Die Radreifen dienen zum Abrollen auf einer Fahrfläche, insbesondere auf einer Schiene. Die Radreifen dienen ggf. weiterhin der Stromleitung zwischen der Welle und einer Schiene.

Vorzugsweise weist diese Radscheibe eine Kontaktfläche für einen dieser Radreifen auf. Diese Kontaktfläche dient der insbesondere kraftschlüssigen und ggf. elektrischen Verbindung dieser Radscheibe mit diesem Radreifen. Diese bevorzugte Ausgestaltung bietet den Vorteil, dass Kräfte, Drehmomente und ggf. ein elektrischer Strom von der Radscheibe in den Radreifen oder in umgekehrter Richtung übertragen werden können.

Vorzugsweise weist diese Radscheibe diesen ersten Werkstoff sowie Fasern aus diesem zweiten Werkstoff auf. Diese bevorzugte Ausgestaltung bietet den Vorteil, dass das Gewicht eines Rades mit dieser Radscheibe insbesondere gegenüber einem Rad aus Stahl oder einer Eisenlegierung verringert ist.

Vorzugsweise weist die Radscheibe zumindest einen, insbesondere metallischen, Scheibeneinleger auf. Dieser Scheibeneinleger dient insbesondere der Versteifung der Radscheibe bzw. der Erhöhung ihrer Tragfähigkeit sowie der elektrischen Leitung zwischen einem dieser Radreifen und einem dieser Wellenkörper. Vorzugsweise erstreckt sich dieser Scheibeneinleger in radialer Richtung, insbesondere zwischen diesem Wellenkörper und dieser Kontaktfläche. Vorzugsweise weist die Radscheibe mehrere dieser Scheibeneinleger auf, welche sich in verschiedene Radialrichtungen erstrecken. Diese bevorzugte Ausgestaltung bietet die Vorteile, dass die Radscheibe neben ihrer Tragfunktion auch elektrischen Strom leiten kann und dass die Wandstärke dieser Radscheibe geringer gewählt werden kann, als wenn die Radscheibe ohne Scheibeneinleger ausgebildet wäre.

Gemäß einer bevorzugten Weiterbildung weist die Radscheibe einen Verbindungsbereich auf, welcher zur Verbindung mit einem dieser Lastkopplungsabschnitte vorgesehen ist. Vorzugsweise weisen dieser Verbindungsbereich und dieser Lastkopplungsabschnitt aneinander angepasste Flansche und/oder Lochkreise auf. Vorzugsweise ist die Radscheibe zwischen zwei dieser Wellenkörper angeordnet und mit diesem Wellenkörper insbesondere kraftschlüssig und/oder formschlüssig verbunden, besonders bevorzugt verschraubt. Diese bevorzugte Weiterbildung bietet den Vorteil, dass die Radscheibe von der Welle bzw. von einem dieser Wellenkörper lösbar ist.

Gemäß einer zweiten bevorzugten Weiterbildung sind einer dieser Wellenkörper und eine dieser Radscheiben miteinander einstückig ausgebildet. Diese bevorzugte Weiterbildung bietet den Vorteil eines verringerten Gesamtgewichts von Wellenkörper bzw. Welle und Radscheibe.

Vorzugsweise weist der Wellenkörper zumindest einen Übergangsbereich auf. Dieser Übergangsbereich ist zwischen einem dieser Längsabschnitte und einem dieser Lastkopplungsabschnitte angeordnet. Der Außendurchmesser des Übergangsbereichs nimmt vorzugsweise entlang der Längsachse dieses Wellenkörpers von diesem Längsabschnitt in Richtung dieses Lastkopplungsabschnitts, insbesondere stetig, d. h. ohne Durchmessersprung, zu. Bei dieser Ausbildung des Wellenkörpers ist die Kerbwirkung, welche durch die unterschiedlich bemessenen ersten und zweiten Außendurchmesser bewirkt werden kann, verringert.

Vorzugsweise sind dieser Übergangsbereich, dieser Längsabschnitt und dieser Lastkopplungsabschnitt miteinander einstückig ausgebildet. Diese bevorzugte Ausgestaltung bietet den Vorteil, dass die Dauerhaltbarkeit des Wellenkörpers verbessert ist.

Vorzugsweise ist zumindest einer dieser Lastkopplungsabschnitte als Flansch oder als Bund ausgebildet und/oder weist zumindest eine Bohrung auf.

Vorzugsweise ist dieser Lastkopplungsabschnitt als Flansch ausgebildet. Dieser Flansch dient der insbesondere kraftschlüssigen Verbindung des Wellenkörpers mit einem Funktionsbauteil, insbesondere mit einem Schienenrad, einer Bremsscheibe oder einem Lasteinleitungselement. Vorzugsweise weist dieser Flansch zumindest eine insbesondere ringförmige Anlagefläche für dieses Funktionsbauteil auf.

Besonders bevorzugt weist dieser Lastkopplungsabschnitt, insbesondere in dieser Anlagefläche, eine oder mehrere Bohrungen, insbesondere auf einem Lochkreis, für Verbindungsmittel auf, insbesondere für Schrauben oder Nieten. Diese bevorzugte Ausgestaltung bietet den Vorteil einer einfacheren Verbindung von diesem Wellenkörper mit diesem Funktionsbauteil.

Vorzugsweise ist dieser Lastkopplungsabschnitt als Bund ausgebildet. Dieser Bund dient insbesondere der Berührung mit einem Lager. Besonders bevorzugt weist dieser Bund eine insbesondere ringförmige Anlagefläche oder an seinem Außenumfang eine Gleitfläche für dieses Lager auf. Diese bevorzugte Ausgestaltung bietet den Vorteil, dass die Montage des Lagers vereinfacht ist.

Vorzugsweise weist die Körperwandung dieses Wellenkörpers eine, insbesondere elastische, Beschichtung auf. Diese dient vorzugsweise dem Schutz des ersten und/oder des zweiten Materials vor Umwelteinflüssen wie Hitze, Feuchtigkeit oder einer mechanischen Einwirkung durch Fremdkörper, insbesondere als Steinschlagschutz, und/oder als Geräuschdämmung durch Verhinderung der Ausbreitung von Schallwellen, die von dem Wellenkörper erzeugt werden.

Vorzugsweise weist die Funktionseinrichtung ein oder mehrere Funktionselemente auf. Das zumindest eine Funktionselement dient insbesondere dem einwandfreien Betrieb des Fahrzeugs bzw. der Welle. Vorzugsweise weist die Funktionseinrichtung mehrere verschiedenartige Funktionselemente auf, welche für einen einwandfreien Betrieb des Fahrzeugs zusammenwirken. Besonders bevorzugt sind ein oder mehrere dieser Funktionselemente als elektronische Baugruppen ausgebildet.

Vorzugsweise sind zumindest eines dieser Funktionselemente als Messfühler ausgebildet. Dieser zumindest eine Messfühler dient der Erfassung zumindest eines dieser Betriebsparameter. Weiter dient der Messfühler dazu, der Steuereinrichtung einen zugehörigen Messwert zur Verfügung zu stellen, gemeinsam mit einem Wert, welcher stellvertretend für den Zeitpunkt der Erfassung des Messwertes ist.

Besonders bevorzugt ist der Messfühler ausgebildet als eine Kraftmesseinrichtung, eine Druckmesseinrichtung, eine Dehnungsmesseinrichtung, eine Verdrehungswinkelmesseinrichtung, eine Verschiebestreckenmesseinrichtung, eine Drehfrequenzmesseinrichtung, eine Geschwindigkeitsmesseinrichtung, eine optische Messeinrichtung oder eine Temperaturmesseinrichtung.

Vorzugsweise ist zumindest eines dieser Funktionselemente als Steuereinrichtung ausgebildet, welche der Steuerung bzw. Überwachung zumindest eines weiteren dieser Funktionselemente, dieser Welle, eines dieser Wellenkörper, eines dieser Funktionsbauteile, insbesondere eines Schienenrades, und/oder einer dieser Radscheiben dient. Weiter dient die Steuereinrichtung zum Austausch von Informationen bzw. Signalen mit zumindest einem dieser Messfühler und/oder mit dieser Kommunikationseinrichtung. Weiter dient die Steuereinrichtung der Auswertung erfasster Messwerte. Weiter dient die Steuereinrichtung zur Bereitstellung von Betriebsdaten.

Unter Betriebsdaten im Sinne der Erfindung sind zu verstehen: erfasste Messwerte, ausgewertete Messwerte, zeitliche Verläufe von Messwerten, Vergleiche von erfassten Messwerten mit Zielwerten von Betriebsparametern, Vergleiche zeitlicher Verläufe von erfassten Messwerten mit geplanten Verläufen von Betriebsparametern, wobei geplante Verläufe von Betriebsparametern vorliegend Zielverläufe genannt werden, Ergebnisse von Verknüpfungen von zumindest zwei erfassten Messwerten.

Vorzugweise ist zumindest eines dieser Funktionselemente als Energieversorgungseinrichtung ausgebildet, welche der insbesondere elektrischen Versorgung zumindest eines weiteren dieser Funktionselemente dient.

Gemäß einer ersten bevorzugten Weiterbildung ist die Energieversorgungseinrichtung mit einem Spannungswandler ausgebildet. Der Spannungswandler dient dazu, eine Betriebsspannung für zumindest ein weiteres dieser Funktionselemente zur Verfügung zu stellen, insbesondere wenn der Energieversorgungseinrichtung ein Wechselstrom zugeführt wird. Diese bevorzugte Weiterbildung bietet die Vorteile, dass auf einen zentralen Spannungswandler des Fahrzeugs verzichtet werden kann bzw. dass diese Funktionseinrichtung keine zusätzliche Last für den zentralen Spannungswandler des Fahrzeugs bedeutet.

Gemäß einer zweiten bevorzugten Weiterbildung ist die Energieversorgungseinrichtung mit einer Spule ausgebildet, insbesondere für drahtlosen bzw. induktiven Empfang von Energie, insbesondere von einer Spule des Fahrzeugs. Vorzugsweise ist die Spule in einer dieser Körperwandungen angeordnet, besonders bevorzugt in einem dieser Lastkopplungsabschnitte. Diese bevorzugte Weiterbildung bietet den Vorteil, dass auf Schleifkontakte zur Übertragung von Energie an die Energieversorgungseinrichtung verzichtet werden kann. Diese bevorzugte Weiterbildung ist mit der ersten bevorzugten Weiterbildung kombinierbar.

Gemäß einer dritten bevorzugten Weiterbildung ist die Energieversorgungseinrichtung mit einer, ggf. wiederaufladbaren, Batterie ausgebildet. Die Batterie dient als Zwischenspeicher für Energie, insbesondere für den Fall, dass der Empfang von Energie insbesondere vom Fahrzeug zeitweise unterbrochen ist. Diese bevorzugte Ausgestaltung bietet den Vorteil erhöhter Verfügbarkeit der Funktionseinrichtung. Diese bevorzugte Weiterbildung ist mit der ersten und/oder der zweiten bevorzugten Weiterbildung kombinierbar.

Vorzugweise ist zumindest eines dieser Funktionselemente als Datenspeichereinrichtung ausgebildet, welche zum Abspeichern insbesondere dieser Zielwerte, Zielverläufe und/oder Betriebsdaten dient. Weiter dient die Datenspeichereinrichtung zum Abspeichern von Software. Weiter dient die Datenspeichereinrichtung dazu, der Steuereinrichtung und/oder dieser Kommunikationseinrichtung gespeicherte Daten zur Verfügung zu stellen.

Vorzugweise ist zumindest eines dieser Funktionselemente als, insbesondere leitungsgebundene oder drahtlose, Kommunikationseinrichtung ausgebildet, welche insbesondere dem Austausch von Daten bzw. Informationen mit dieser Steuereinrichtung und/oder mit einer nicht der Welle zugehörigen externen Kommunikationseinrichtung dient. Die externe Kommunikationseinrichtung ist insbesondere dem Fahrzeug oder einer Wartungs- oder Prüfeinrichtung außerhalb des Fahrzeugs zugehörig. Die Kommunikationseinrichtung dient insbesondere:

- der Mitteilung eines erwünschten oder unerwünschten Betriebszustands des Radsatzes, der Welle, einer dieser Radscheiben, eines dieser Wellenkörper und/oder eines dieser Funktionsbauteile und/oder

- der Mitteilung von Betriebsdaten.

Vorzugsweise ist die Kommunikationseinrichtung ausgebildet als Spule, Antenne, Piepser, lichtemittierende Diode, Infrarotschnittstelle, GSM-Baugruppe, Nahfunkeinrichtung oder Transponder. Diese bevorzugte Ausgestaltung bietet den Vorteil, dass eine elektrische Kontaktierung zur Mitteilung von Betriebszuständen oder Betriebsdaten entfallen kann.

Vorzugweise ist zumindest eines dieser Funktionselemente als Stromleiteinrichtung ausgebildet, welche der elektrischen Verbindung mit einem anderen dieser Funktionselemente, mit einem dieser Funktionsbauteile, mit einem dieser Räder und/oder mit einer dieser Radscheiben dient. Die Stromleiteinrichtung dient insbesondere der elektrischen Verbindung des Fahrzeugs mit der Fahrfläche.

Besonders bevorzugt verbindet eine dieser Stromleiteinrichtungen einen dieser Messfühler mit dieser Steuereinrichtung. Besonders bevorzugt verbindet eine dieser Stromleiteinrichtungen diese Energieversorgungseinrichtung mit dieser Steuereinrichtung und/oder mit zumindest einem dieser Messfühler. Besonders bevorzugt verbindet die Stromleiteinrichtung eine Bremsscheibe elektrisch mit einer Radscheibe.

Eine erste bevorzugte Ausführungsform der Funktionseinrichtung weist zumindest einen dieser Messfühler, diese Steuereinrichtung und diese Energieversorgungseinrichtung auf. Diese bevorzugte Ausführungsform dient dazu, insbesondere mechanische Beanspruchungen des Wellenkörper bzw. der Welle zu erfassen. Diese bevorzugte Ausführungsform ist dazu ausgebildet, zumindest zeitweise, insbesondere periodisch, insbesondere auf Veranlassung durch die Steuereinrichtung, einen Messwert zu einem Betriebsparameter des Radsatzes, der Welle, des zugehörigen Wellenkörpers, einer dieser Radscheiben, eines dieser Räder und/oder einem dieser Funktionsbauteile zu erfassen. Der zumindest eine Messfühler, die Steuereinrichtung und diese Energieversorgungseinrichtung sind untereinander elektrisch verbunden, vorzugsweise mittels zumindest einer dieser Stromleiteinrichtungen. Diese bevorzugte Ausführungsform bietet den Vorteil, dass die Funktionsfähigkeit bzw. die Integrität des Wellenkörpers bzw. der Welle während des Betriebs überwacht werden kann.

Eine erste bevorzugte Weiterbildung dieser Funktionseinrichtung weist diese Datenspeichereinrichtung auf. Die Datenspeichereinrichtung ist mit der Steuereinrichtung zum Empfang, insbesondere zum Austausch von Daten verbunden, insbesondere über zumindest eine dieser Stromleiteinrichtungen. Empfangene Daten, insbesondere erfasste Messwerte zu Betriebsparametern oder andere Betriebsdaten können in der Datenspeichereinrichtung abgespeichert werden, vorzugsweise gemeinsam mit einem Wert, welcher stellvertretend für den Zeitpunkt der Erfassung des Messwertes ist. So kann in der Datenspeichereinrichtung ein Protokoll mit Betriebsparametern bzw. Betriebsdaten erzeugt bzw. abgespeichert werden. Diese bevorzugte Weiterbildung bietet den Vorteil, dass dieses Protokoll insbesondere für Wartungstätigkeiten und/oder für technische Weiterentwicklungen herangezogen werden kann.

Eine zweite bevorzugte Weiterbildung dieser Funktionseinrichtung weist diese Kommunikationseinrichtung auf. Diese Kommunikationseinrichtung ist mit der Steuereinrichtung und/oder der Datenspeichereinrichtung derart verbunden, insbesondere über zumindest eine dieser Stromleiteinrichtungen, dass erfasste Messwerte und/oder insbesondere abgespeicherte Betriebsdaten an eine externe Kommunikationseinrichtung übermittelt werden können. Diese bevorzugte Weiterbildung bietet den Vorteil, dass ein Bediener des Fahrzeugs, Wartungspersonal und/oder ein Entwickler auf Daten der Datenspeichereinrichtung zugreifen kann.

Vorzugsweise ist die Funktionseinrichtung ausgestaltet, aus einem ersten Zustand in einen zweiten Zustand überführt werden zu können. In dem ersten Zustand weist die Funktionseinrichtung einen insbesondere vorbestimmten ersten elektrischen Widerstand $R_{F1}$ auf. In dem zweiten Zustand weist die Funktionseinrichtung einen insbesondere vorbestimmten zweiten elektrischen Widerstand $R_{F2}$ auf. Vorzugsweise ist die Funktionseinrichtung ausgestaltet, ihren zweiten Zustand anzunehmen, wenn eine insbesondere mechanische Belastung des zugehörigen Wellenkörpers eine vorbestimmte Mindestbelastung überschreitet. Besonders bevorzugt ist die Funktionseinrichtung ausgestaltet, mit steigender Belastung oberhalb dieser Mindestbelastung auch höhere zweite Widerstände $R_{F2}$ anzunehmen. Diese bevorzugte Ausgestaltung bietet den Vorteil, dass aus dem zweiten Widerstand $R_{F2}$ auf die insbesondere mechanische Belastung geschlossen werden kann.

Gemäß einer ersten bevorzugten Weiterbildung ist die Funktionseinrichtung als Metalldraht ausgebildet. Mit zunehmender plastischer Dehnung des Metalldrahts steigt dessen elektrischer Widerstand.

Gemäß einer zweiten bevorzugten Weiterbildung ist diese Funktionseinrichtung als elektrisch leitfähige Folie, insbesondere als Metallfolie, ausgebildet. Mit zunehmender plastischer Dehnung der leitfähigen Folie steigt deren elektrischer Widerstand. Mit zunehmender Dehnung reißt die leitfähige Folie bereichsweise, wodurch der für elektrische Leitung wirksame Querschnitt verringert wird.

Gemäß einer dritten bevorzugten Weiterbildung weist die Funktionseinrichtung zumindest einen dieser Messfühler insbesondere für den elektrischen Widerstand dieser Funktionseinrichtung auf. Diese bevorzugte Weiterbildung ist mit der ersten oder zweiten bevorzugten Weiterbildung kombinierbar.

Vorzugsweise weist die Funktionseinrichtung eine geringere Bruchdehnung auf als zumindest eine benachbarte dieser Trageinrichtungen desselben Wellenkörpers. Wenn der Wellenkörper zunehmend gedehnt wird, infolge einer insbesondere mechanischen Belastung, und dabei die Bruchdehnung der Funktionseinrichtung überschritten wird, dann reißt bzw. bricht die Funktionseinrichtung zumindest bereichsweise. Bei einer Untersuchung dieser Funktionseinrichtung kann aus deren lokalen Defekten auf das Dehnungsverhalten geschlossen werden. Vorzugsweise erfolgt diese Untersuchung mittels Thermografie.

Vorzugsweise weist die Welle zumindest eine erste Anordnung aus zumindest zwei dieser Wellenkörper und einem dieser, nicht der Welle bzw. diesen Wellenkörpern zugehörigen, insbesondere metallischen Funktionsbauteile auf. Das Funktionsbauteil ist zwischen diesen beiden Wellenkörpern angeordnet. Vorzugsweise ist das Funktionsbauteil als metallische Bremsscheibe oder als metallisches Lasteinleitungselement ausgebildet. Vorzugsweise sind zumindest einer dieser Wellenkörper und das Funktionsbauteil insbesondere kraftschlüssig und/oder lösbar miteinander verbunden. Besonders bevorzugt ist zumindest einer dieser Wellenkörper mit diesem Funktionsbauteil elektrisch verbunden. Diese bevorzugte Ausgestaltung bietet die Vorteile, dass die metallischen Funktionsbauteile zur höheren Festigkeit bzw. Steifigkeit dieser ersten Anordnung beitragen und dass bei einem Defekt eines dieser Wellenkörper weniger Abfall entsteht, da lediglich der defekte Wellenkörper, nicht aber die gesamte Welle ausgetauscht werden muss.

Vorzugsweise weist die Körperwandung zumindest eines dieser Wellenkörper mehrere Schichten auf, welche vorzugsweise konzentrisch zur Längsachse des Wellenkörpers angeordnet sind. Jede Schicht besteht aus wenigstens einer Faserlage, vorzugsweise jedoch aus mehreren Faserlagen. Bei den Schichten handelt es sich insbesondere um Tragschichten und um Funktionsschichten.

Unter Tragschichten werden dabei solche Schichten verstanden, welche der strukturmechanischen Stabilisierung der Radsatzwelle dienen und somit die im Betrieb der Radsatzwelle auftretenden Kräfte und Drehmomente tragen sollen, d. h. Schichten, die einer Tragfunktion dienen. Die Tragschichten sind vorzugsweise aus dem ersten und aus dem zweiten Werkstoff gefertigt.

Unter Funktionsschichten werden solche Schichten verstanden, die im Wesentlichen keine Tragfunktion haben, jedoch wenigstens ein Funktionselement aufweisen. Die Funktionsschichten sind im Allgemeinen nicht aus dem ersten oder aus dem zweiten Werkstoff, sondern je nach Art des Funktionselementes aus anderen, metallischen oder nicht-metallischen, Werkstoffen gefertigt.

Der Aufbau der Körperwandung eines Wellenkörpers aus mehreren Schichten, insbesondere mehreren Tragschichten, hat den Vorteil, dass der Wellenkörper und damit die Welle und der Radsatz aufgrund der anisotropen Eigenschaftscharakteristik des ersten und zweiten Werkstoffs, d. h. des Faserverbundwerkstoffs, insbesondere aufgrund der richtungsabhängigen Elastizität des zweiten Werkstoffs, auf den jeweils vorherrschenden Belastungsfall optimiert ausgestaltet werden können. Somit wird eine große Flexibilität bezüglich der Anzahl, der Dicke und der Struktur der einzelnen Schichten und damit eine gute Anpassbarkeit an den jeweiligen Anwendungsfall erreicht.

Vorzugsweise weist jede Tragschicht einen bestimmten Faserwinkel auf. Unter dem Faserwinkel wird hierbei der Winkel zwischen der Faser - bzw., da die Fasern im Allgemeinen aufgrund der rotationssymmetrischen Form des Wellenkörpers gekrümmt sind, deren Tangente - und der Längsachse des Wellenkörpers in mathematisch positiver Winkelrichtung verstanden. Der Faserwinkel innerhalb einer Tragschicht ist vorzugsweise konstant oder nahezu konstant, insbesondere wenn die Tragschicht durch Wickeln der Faser mit einem konstanten Winkel um einen Wickelkern oder um die zuletzt gewickelte, d. h. nach radial innen benachbarte, Schicht hergestellt wird.

Bevorzugte Faserwinkel sind hierbei 0°, 22,5°, 30°, 45°, 60° und 90°. Ein Faserwinkel von 0° entspricht einer axialen Faserorientierung, welcher vorzugsweise nicht durch Wickeln der Faser, sondern durch Herumwickeln einer Matte oder Ähnlichem mit axial orientierten Fasern um den Wickelkern bzw. um die zuletzt gewickelte Schicht erzeugt wird. Ein Faserwinkel von 90° entspricht einer Faserorientierung in Umfangsrichtung, welcher in der Praxis im Allgemeinen nur näherungsweise durch Wickeln der Faser mit einem sehr großen, annähernd 90° betragenden Faserwinkel erzeugt wird.

Tragschichten mit bestimmten Faserwinkeln sind hierbei besonders gut dazu geeignet, einen bestimmten mechanischen Belastungszustand, die sogenannten "Vorzugsbelastung", insbesondere Druck, Biegung oder Torsion, aufzunehmen. Es hat sich etwa gezeigt, dass die Vorzugsbelastung einer Tragschicht mit einem Faserwinkel von etwa 0° eine Biegebelastung, die Vorzugsbelastung einer Tragschicht mit einem Faserwinkel von etwa 45° eine Torsionsbelastung und die Vorzugsbelastung einer Tragschicht mit einem Faserwinkel von etwa 90° eine Druckbelastung ist.

Zwischen den genannten Winkeln liegende Faserwinkel weisen Vorzugsbelastungen auf, die sich aus mehreren Belastungszuständen zusammensetzen: Beispielsweise ist die Vorzugsbelastung einer Tragschicht mit einem Faserwinkel von 22,5° eine Torsions- und Biegebelastung im Verhältnis 1:1, und die Vorzugsbelastung einer Tragschicht mit einem Faserwinkel von 30° ist eine Torsions- und Biegebelastung im Verhältnis 2:1.

Besonders bevorzugt ist es, dass die Fasern dieses Wellenkörpers wenigstens bereichsweise einen Winkel kleiner als 10 Grad, vorzugsweise kleiner als 5 Grad, weiter vorzugsweise von 0 Grad, oder wenigstens bereichsweise einen Winkel zwischen 20 und 40 Grad, vorzugsweise zwischen 25 und 35 Grad, weiter vorzugsweise von 30 Grad, oder wenigstens bereichsweise einen Winkel größer als 80 Grad, vorzugsweise größer als 85 Grad, weiter vorzugsweise von 90 Grad, mit der Längsachse dieses Wellenkörpers einschließen.

Erfindungsgemäß weist dieser Wellenkörper wenigstens zwei, vorzugsweise wenigstens drei, in unterschiedlichem radialem Abstand zu seiner Längsachse angeordnete Faserschichten auf, und wenigstens zwei Faserschichten weisen wenigstens bereichsweise unterschiedliche mechanische Eigenschaften und insbesondere ein unterschiedliches Dehnungsverhalten auf.

Weiterhin ist besonders bevorzugt, dass wenigstens eine Faserschicht derart gestaltet ist, dass sich darin wenigstens eine Faser bei Überschreiten eines bestimmten Schwellwertes der Belastung bleibend verformen und dass wenigstens eine Funktionseinrichtung dafür vorgesehen ist, diese bleibende Verformung zu detektieren.

Unter einer bleibenden Verformung ist insbesondere ein irreversibles Dehnen, Überdehnen oder auch ein Reißen der Fasern zu verstehen. Insbesondere wenn es sich um elektrisch leitfähige Fasern handelt, kann deren Reißen leicht detektiert werden, indem die Stromleitfähigkeit der Fasern getestet wird.

Auf diese Weise können unerwünschte Betriebszustände des Wellenkörpers, der Welle oder des Radsatzes frühzeitig und zuverlässig entdeckt werden. Diese Ausführungsform bietet sich besonders dann an, wenn der so detektierte Betriebszustand ohnehin einen Austausch des Wellenkörpers erforderlich macht, da es dann unerheblich ist, dass die Detektion durch die bleibende Verformung der Fasern nur ein einziges Mal vorgenommen werden kann.

Besonders bevorzugt ist auch, dass in jeder Faserschicht die Fasern einen bestimmten, innerhalb der Schicht konstanten Faserwinkel aufweisen und dass der Wellenkörper nur Faserschichten mit genau zwei verschiedenen Faserwinkeln aufweist. Dies vereinfacht das Herstellungsverfahren für den Wellenkörper erheblich.

Vorzugsweise weisen in diesem Fall je zwei Faserschichten, zwischen denen sich keine weiteren Faserschichten befinden, verschiedene Faserwinkel auf, d. h. die Faserschichten weisen abwechselnd die beiden (einzig vorhandenen) Faserwinkel auf. Ggf. zwischen den Faserschichten liegende Funktionsschichten, welche keine Faserschichten sind, bleiben hierbei unberücksichtigt, da sie im Allgemeinen vergleichsweise dünn sind und die strukturmechanischen Eigenschaften des Wellenkörpers kaum beeinflussen.

Vorzugsweise weisen die Faserschichten dabei abwechselnd einen ersten Faserwinkel zwischen 20 und 40 Grad, vorzugsweise zwischen 25 und 35 Grad, weiter vorzugsweise von 30 Grad, und einen zweiten Faserwinkel größer als 80 Grad, vorzugsweise größer als 85 Grad, weiter vorzugsweise von 90 Grad, auf.

Weitere Vorteile von bestimmten Tragschichtanordnungen sind eine geringe Rissanfälligkeit sowie ein hoher Faservolumengehalt. Bei der Festlegung des Schichtaufbaus der Körperwandung des Wellenkörpers ist im Einzelfall ein einfacher Aufbau mit einer geringen Anzahl von Schichten gegenüber diesen und weiteren, bereits genannten Vorteilen abzuwägen.

Vorzugsweise haben benachbarte Schichten verschiedene Faserwinkel und ggf. verschiedene Dicken, wodurch sich die strukturmechanischen Stabilitätseigenschaften des Wellenkörpers sehr gut einstellen und anhand von theoretischen und experimentellen Erkenntnissen weiter verbessern lassen.

Vorzugsweise werden die aufgrund einer Biegebeanspruchung zug- und druckbelasteten Faserstränge mit den entsprechenden Faserwinkeln möglichst weit radial außen angeordnet, um eine besonders große Werkstoffauslastung sicherzustellen.

Ein erfindungsgemäßer Radsatz für Schienenfahrzeuge, weist zumindest auf:

- diese Welle mit einem, vorzugsweise zwei oder mehreren dieser Wellenkörper, wobei dieser Wellenkörper zumindest zwei, vorzugsweise mindestens drei dieser Lastkopplungsabschnitte aufweist,

- eines oder mehrere dieser Funktionsbauteile, vorzugsweise ausgebildet als Bremsscheibe oder Lasteinleitungselement, wobei dieses Funktionsbauteil zur Verbindung mit einem dieser Lastkopplungsabschnitte eines dieser Wellenkörper vorgesehen und ausgestaltet ist.

Vorzugsweise weist dieser Radsatz eine Funktionseinrichtung gemäß deren erster bevorzugter Ausführungsform mit einem Messfühler, einer Steuereinrichtung und einer Energieversorgungseinrichtung auf. Diese bevorzugte Ausgestaltung bietet den Vorteil, dass der Radsatz während seines Betriebs überwacht werden kann.

Ein erfindungsgemäßer Radsatz mit einer Funktionseinrichtung gemäß deren erster bevorzugter Weiterbildung mit einer Datenspeichereinrichtung bietet den Vorteil, dass der Datenspeichereinrichtung fortlaufende Betriebsdaten entnommen werden können. Diese bevorzugte Ausgestaltung bietet den Vorteil, dass der Radsatz insbesondere unerwünschte Betriebszustände mitteilen kann.

Vorzugsweise weist der Radsatz mehrere dieser Bremsscheiben auf. Diese bevorzugte Ausgestaltung bietet den Vorteil, dass der elektrische Strom zwischen dem Fahrzeug, insbesondere dem Schienenfahrzeug, und der Fahrfläche, insbesondere einer Schiene, auf mehrere Bremsscheiben aufgeteilt werden kann. Diese bevorzugte Ausgestaltung bietet den Vorteil, dass mehrere redundante Strompfade gebildet sind.

Gemäß einer ersten bevorzugten Weiterbildung weist dieser Radsatz zwei dieser Räder auf. Diese Räder sind mit verschiedenen dieser Lastkopplungsabschnitte, insbesondere kraftschlüssig und/oder elektrisch leitend, verbunden. Diese bevorzugte Weiterbildung bietet den Vorteil, dass das Gewicht dieses Radsatzes gegenüber einem üblichen Radsatz mit metallischer Welle verringert ist.

Gemäß einer zweiten bevorzugten Weiterbildung weist dieser Radsatz zwei dieser Radscheiben auf. Diese Radscheiben sind je mit zumindest einem dieser Wellenkörper insbesondere kraftschlüssig verbunden, vorzugsweise elektrisch leitend verbunden und besonders bevorzugt mit dem Wellenkörper einstückig ausgebildet. Dieser Radsatz weist weiter zwei dieser insbesondere metallischen Radreifen auf. Diese Radreifen sind kraftschlüssig und/oder elektrisch mit je einer dieser Kontaktflächen verbunden. Zumindest zwei dieser Lastkopplungsabschnitte sind zum Abstützen von Lagern, insbesondere ausgebildet als Wälzlager oder Gleitlager, vorgesehen. Diese Lager dienen der Aufnahme von Kräften aus der Fahrzeugmasse. Diese Lager dienen auch dazu, den Radsatz rotationsbeweglich bezüglich des Fahrzeugs zu halten. Vorzugsweise ist zumindest eine dieser Radscheiben mit einem dieser Wellenkörper elektrisch leitend verbunden. Besonders bevorzugt ist ein Strompfad aus einer dieser Bremsscheiben, einem dieser Wellenkörper, einer dieser Radscheiben sowie einem dieser Radreifen gebildet. Dazu weisen dieser Wellenkörper und diese Radscheibe je zumindest eine Stromleiteinrichtung und/oder zumindest einen metallischen Einleger auf. Diese bevorzugte Ausgestaltung bietet den Vorteil, dass elektrischer Strom zwischen dem Fahrzeug, insbesondere dem Schienenfahrzeug und der Fahrfläche, insbesondere einer Schiene, fließen kann.

Ein Verfahren zum Herstellen eines dieser Wellenkörper der Welle, sieht folgende Schritte vor:

(S1) Vorbereiten eines Fasermaterials bzw. dieses zweiten Werkstoffs als insbesondere schlauchförmiges Geflecht, als Gewebe oder als Gelege, wobei insbesondere, beispielsweise für größere Stückzahlen von herzustellenden Wellenkörpern, das Fasermaterial als schlauchförmiges Geflecht, vorliegend auch Flechtschlauch genannt, vorbereitet wird oder, beispielsweise für geringere Stückzahlen von herzustellenden Wellenkörpern, mehrere bandförmige Lagen des Fasermaterials mit unterschiedlicher Ausrichtung der Fasern zu einem sogenannten Faserlagenband übereinandergelegt werden,

(S2) Anordnen des Fasermaterials um ein, insbesondere rotationssymmetrisches, Formteil, wodurch ein Wellenkörperrohling gebildet wird, wobei insbesondere, beispielsweise für größere Stückzahlen von herzustellenden Wellenkörpern, ein Flechtschlauch über ein im Wesentlichen rotationssymmetrisches Formteil gestülpt wird, oder, beispielsweise für kleinere Stückzahlen von herzustellenden Wellenkörpern, ein Faserlagenband um dieses im Wesentlichen rotationssymmetrische Formteil gewickelt wird,

(S3) Anordnen von insbesondere bandförmigem Fasermaterial, insbesondere um den Wellenkörperrohling im Bereich eines dieser Lastkopplungsabschnitte des späteren Wellenkörpers,
wobei das Fasermaterial der bereichsweisen Erhöhung der Wandstärke der Körperwandung, insbesondere zur Ausbildung eines dieser Lastkopplungsabschnitte oder eines dieser Übergangsbereiche, dient,

(S4) Anordnen wenigstens einer Funktionseinrichtung, wenigstens eines metallischen oder nicht-metallischen Formteiles und/oder wenigstens eines insbesondere metallischen Einlegebauteils in oder an dem Wellenkörperrohling,

(S5) Zugeben eines, insbesondere aushärtbaren, ersten Werkstoffs zu dem Wellenkörperrohling bzw. zu dem Fasermaterial,
wobei insbesondere, beispielsweise für kleinere Stückzahlen von herzustellenden Wellenkörpern, das Faserlagenband durch ein Bad des ersten Werkstoffs geführt wird, bevor das Faserlagenband um das Formteil gewickelt wird (d. h. Schritt S5 wird in diesem Fall vor Schritt S2 ausgeführt), oder, beispielsweise für größere Stückzahlen von herzustellenden Wellenkörpern, der um das Formteil in einer trennbaren Form angeordnete Flechtschlauch mit dem ersten Werkstoff getränkt und der erste Werkstoff mit Überdruck in diese trennbare Form eingespritzt wird,

(S6) Aushärten des ersten Werkstoffs, insbesondere mittels Erhöhen der Temperatur des ersten Werkstoffs,

(S7) Anbringen einer Beschichtung auf einen Bereich des Wellenkörpers.

Das Formteil erstreckt sich ausgehend von einer insbesondere spiegelsymmetrischen, punktsymmetrischen oder rotationssymmetrischen Grundfläche entlang seiner Längsachse. In der Ausführungsform, in der die Körperwandung dieses Wellenkörpers einen vorzugsweise mit Luft gefüllten Hohlraum umschließt, entspricht das Formteil vorzugsweise im Wesentlichen diesem Hohlraum. Weiter ist das Formteil bzw. der Hohlraum an die Außenkontur des Wellenkörpers angenähert.

Vorzugsweise ist das Formteil mehrteilig, insbesondere zweiteilig, ausgebildet, wobei die einzelnen Teile voneinander gelöst werden können, insbesondere nach Fertigstellung des Wellenkörperrohlings. Diese bevorzugte Ausgestaltung bietet den Vorteil, dass der Wellenkörper nach seiner Fertigstellung einfacher vom Formteil getrennt werden kann.

Vorzugsweise weist das Formteil Anlageflächen entsprechend den Lastkopplungsabschnitten bzw. Längsabschnitten des Wellenkörpers auf. Diese bevorzugte Ausgestaltung bietet den Vorteil, dass mit Anordnen des Fasermaterials um das Formteil die Geometrie für den Wellenkörper zumindest bereichsweise vorgegeben wird.

Gemäß einer ersten bevorzugten Weiterbildung des Verfahrens wird der Wellenkörper mit den Schritten S1, S2, vorzugsweise S3, vorzugsweise S4, S5, S6 und vorzugsweise S7 hergestellt.

Gemäß einer zweiten bevorzugten Weiterbildung des Verfahrens wird der Wellenkörper nach dem sogenannten Wickelverfahren gefertigt, insbesondere, aber nicht nur, für kleinere Stückzahlen von herzustellenden Wellenkörpern. Dabei werden zunächst mehrere bandförmige Lagen des Fasermaterials mit unterschiedlichen Ausrichtungen der Fasern gemäß Schritt S1 zu einem sogenannten Faserlagenband übereinandergelegt. Das Faserlagenband wird gemäß Schritt S5 durch ein Bad des ersten Werkstoffs geführt, unmittelbar bevor das Faserlagenband gemäß Schritt S2 um das Formteil gewickelt wird. Vorzugsweise wird insbesondere in einem Bereich des Faserlagenbands, welcher einem dieser Lastkopplungsabschnitte entspricht, gemäß Schritt S3 zumindest eine Lage eines insbesondere bandförmigen Fasermaterials angeordnet,. Vorzugsweise wird zumindest eine dieser Funktionseinrichtungen und/oder zumindest eines dieser Einlegebauteile gemäß Schritt S4 zwischen zwei Faserschichten des Wellenkörperrohlings eingewickelt. Anschließend wird der erste Werkstoff gemäß Schritt S6 ausgehärtet.

Eine dritte bevorzugte Weiterbildung des Verfahrens stellt eine Kombination aus einem Flechtverfahren und einem sogenannten "Resin Transfer Moulding"-Verfahren (RTM) dar. Hierbei wird das Fasermaterial zunächst gemäß Schritt S1 als Flechtschlauch vorbereitet und gemäß Schritt S2 um dieses Formteil in einer trennbaren Form bereitgestellt. Vorzugsweise wird Schritt S2 für eine größere Wandstärke der Körperwandung mehrfach ausgeführt, sodass mehrere Flechtschläuche übereinander angeordnet sind. Während des Schrittes S2 wird der Flechtschlauch zumindest bereichsweise entsprechend der Gestalt des Wellenkörpers gedehnt. Vorzugsweise wird insbesondere in einem Bereich des Formteils, welcher einem dieser Lastkopplungsabschnitte entspricht, gemäß Schritt S3 zumindest eine Lage eines insbesondere bandförmigen Fasermaterials angeordnet. Vorzugsweise wird gemäß Schritt S4 eine dieser Funktionseinrichtungen und/oder ein Einlegebauteil zwischen zwei dieser Flechtschläuche angeordnet. Anschließend wird gemäß Schritt S5 der erste Werkstoff unter Druck in diese Form gegeben. Dann wird der zweite Werkstoff gemäß Schritt S7 ausgehärtet. Anschließend wird die Form geöffnet und der Wellenkörper entnommen.

Bei der Vorbereitung des Fasermaterials zum Flechtschlauch gemäß Schritt S1 werden vorzugsweise Fasern bzw. Faserstränge mit vorbestimmten ursprünglichen Winkeln gegenüber der Längsachse des Flechtschlauches verflochten. In Schritt S2 wird der Flechtschlauch über das Formteil gestülpt. Dabei wird der Flechtschlauch wenigstens bereichsweise gedehnt und an die Gestalt des Formteils angepasst. Dabei werden die Ausrichtungen und damit die Winkel der einzelnen Fasern bzw. Faserstränge insbesondere im Bereich der späteren Lastkopplungsabschnitte verändert, insbesondere infolge der Dehnung des Flechtschlauches in diesen späteren Lastkopplungsabschnitten durch die Geometrie des Formteils. Im Anschluss an Schritt S2 sind die veränderten, bestimmungsgemäßen Faserwinkel der Fasern bzw. Faserstränge bezüglich der Längsachse des Formteils bzw. des späteren Wellenkörpers größer als deren ursprüngliche Winkel gegenüber der Längsachse des Flechtschlauches.

Vorzugsweise werden die Fasern bzw. Faserstränge in zumindest einem späteren Lastkopplungsabschnitt im Wesentlichen senkrecht zur Längsachse des Formteils ausgerichtet. Ein Verfahren zum Herstellen eines Radsatzes sieht folgende Schritte vor:

(S11) Bereitstellen zumindest eines dieser Wellenkörper, wobei der Wellenkörper zumindest einen dieser Lastkopplungsabschnitte aufweist,

(S12) Hinzufügen zumindest eines dieser Funktionsbauteile zu einem dieser Wellenkörper,

(S13) insbesondere kraftschlüssiges und/oder elektrisches Verbinden eines dieser Funktionsbauteile mit einem dieser Wellenkörper, insbesondere mit einem dieser Lastkopplungsabschnitte,

(S14) Hinzufügen eines dieser Räder,

(S14') Hinzufügen einer dieser Radscheiben, aufweisend eine Kontaktfläche,

(S15) insbesondere kraftschlüssiges und/oder elektrisches Verbinden eines dieser Räder mit einem dieser Wellenkörper, insbesondere mit einem dieser Lastkopplungsabschnitte dieses Wellenkörpers,

(S15') insbesondere kraftschlüssiges und/oder elektrisches Verbinden einer dieser Radscheiben mit einem diesem Wellenkörper, insbesondere mit einem dieser Lastkopplungsabschnitte dieses Wellenkörpers,

(S16) Hinzufügen eines dieser insbesondere metallischen Radreifen auf eine dieser Kontaktflächen einer dieser Radscheiben,

(S17) insbesondere kraftschlüssiges und/oder elektrisches Verbinden zumindest eines dieser Radreifen mit einer dieser Kontaktflächen.

Gemäß einer ersten bevorzugten Weiterbildung dieser bevorzugten Ausgestaltung des Verfahrens wird der Radsatz durch die Schritte S11, S12, S13, S14, S15 hergestellt, wobei die Schritte S14 und S15 je zweimal - für je ein Schienenrad - durchgeführt werden.

Gemäß einer zweiten bevorzugten Weiterbildung dieser bevorzugten Ausgestaltung des Verfahrens wird der Radsatz durch die Schritte S11, S12, S13, S14', S15', S16, S17 hergestellt, wobei die Schritte S14', S15', S16, S17 je zweimal - für je ein Schienenrad - durchgeführt werden. Diese bevorzugte Weiterbildung bietet den Vorteil, dass der hergestellte Radsatz weniger Gewicht aufweist als der nach der ersten bevorzugten Weiterbildung hergestellte Radsatz, insbesondere wenn die Radscheiben aus dem gleichen Material gefertigt sind wie der zumindest eine Wellenkörper.

Gemäß einer dritten bevorzugten Weiterbildung werden die Schritte S12 und S13 jeweils mehrfach durchgeführt. Dabei werden mehrere dieser Funktionsbauteile mit dem Wellenkörper verbunden. Diese bevorzugte Weiterbildung ist mit der ersten oder der zweiten bevorzugten Weiterbildung kombinierbar. Diese bevorzugte Weiterbildung bietet den Vorteil, dass der hergestellte Radsatz zeitgleich mehrere dieser Funktionsbauteile aufweist.

Gemäß einer vierten bevorzugten Weiterbildung wird Schritt S11 mehrfach durchgeführt. Dabei wird eine Welle mit mehreren dieser Wellenkörper hergestellt. Diese bevorzugte Weiterbildung ist mit der ersten, zweiten oder dritten bevorzugten Weiterbildung kombinierbar. Diese bevorzugte Weiterbildung bietet den Vorteil, dass die Reparatur des hergestellten Radsatzes bei einem Defekt eines dieser Wellenkörper mit weniger Abfall einhergeht, da lediglich dieser eine Wellenkörper ausgetauscht werden muss und nicht die gesamte Welle.

Ein Verfahren zum Überwachen einer dieser Wellen, wobei wenigstens eine Steuereinrichtung sowie eine Datenspeichereinrichtung, eine Energieversorgungseinrichtung, wenigstens ein Messfühler zur Erfassung wenigstens eines Betriebsparameters und eine Kommunikationseinrichtung, welche jeweils mit der Steuereinrichtung signalverbunden sind, vorgesehen sind, sieht folgende Schritte vor:

(S21) Zuführen von Energie zu dieser Steuereinrichtung durch eine Energieversorgungseinrichtung, insbesondere drahtlos, insbesondere durch Induktion,

(S22) Erfassen zumindest eines Messwertes für einen Betriebsparameter der Welle durch einen dieser Messfühler, insbesondere auf Veranlassung durch die Steuereinrichtung,

(S23) Bereitstellen dieses zumindest einen Messwertes durch den Messfühler an diese Steuereinrichtung,

(S24) Auswerten dieses zumindest einen Messwertes durch diese Steuereinrichtung, wodurch wenigstens ein Wert für diesen Betriebsparameter gewonnen wird, dabei insbesondere Verknüpfen dieses Messwertes mit zumindest einem Zielwert oder mit zumindest einem anderen dieser Messwerte zu einem Verknüpfungsergebnis,

(S25) Abspeichern dieses zumindest einen Messwertes und ggf. dieses einen Verknüpfungsergebnisses in dieser Datenspeichereinrichtung, insbesondere gemeinsam mit einem Wert, welcher repräsentativ für den Zeitpunkt der Erfassung des Messwertes ist,

(S26) Übermitteln dieses zumindest einen Messwertes und ggf. dieses einen Verknüpfungsergebnisses durch diese Kommunikationseinrichtung an einen Empfänger außerhalb des Radsatzes, insbesondere auf Veranlassung dieses Empfängers,

(S27) Übermitteln eines vorbestimmten ersten Signals, welches insbesondere auf einen unerwünschten Wert für diesen Betriebsparameter hinweist, durch diese Kommunikationseinrichtung, insbesondere auf Veranlassung der Steuereinrichtung, insbesondere an einen Empfänger außerhalb des Radsatzes,

(S28) Übermitteln von Betriebsdaten und/oder Werten für Betriebsparameter durch diese Kommunikationseinrichtung, insbesondere auf Veranlassung durch die Steuereinrichtung oder auf Veranlassung eines Empfängers außerhalb des Radsatzes, an diesen Empfänger.

Eine erste bevorzugte Weiterbildung des Verfahrens ist gekennzeichnet durch die Schritte: S21, S22, S23, S24, S25, wobei vorzugsweise die Schritte S22, S23, S24, S25 mehrfach, besonders bevorzugt ereignisgesteuert oder periodisch, durchgeführt werden. Diese bevorzugte Weiterbildung bietet den Vorteil, dass in der Datenspeichereinrichtung ein Betriebsdatenprotokoll erzeugt wird.

Eine zweite bevorzugte Weiterbildung des Verfahrens ist gekennzeichnet durch Schritt S26, wobei dieser Schritt vorzugsweise mehrfach, besonders bevorzugt ereignisgesteuert oder periodisch durchgeführt wird. Vorzugsweise wird Schritt S26 dabei von einer stationären, inbesondere nahe am oder im Gleis angeordneten Empfangsvorrichtung, insbesondere von einer sogenannten Balise, veranlasst, während der Zug die Empfangsvorrichtung passiert. Diese bevorzugte Weiterbildung bietet den Vorteil, dass Wartungspersonal oder ein Techniker einen dieser Messwerte erfahren und für ihre Tätigkeit verwenden können und dass ein Zug mit diesem Radsatz zur Überprüfung des Radsatzes ggf. nicht anzuhalten braucht, wenn der Zug die stationäre Empfangsvorrichtung passiert.

Diese bevorzugte Weiterbildung ist mit der ersten bevorzugten Weiterbildung kombinierbar.

Eine dritte bevorzugte Weiterbildung des Verfahrens ist gekennzeichnet durch Schritt S27, wobei vorzugsweise dieser Schritt ereignisgesteuert durchgeführt wird. Vorzugsweise handelt es sich bei der Empfangsvorrichtung wieder um eine stationäre Empfangsvorrichtung. Diese bevorzugte Weiterbildung bietet den Vorteil, dass Wartungspersonal, ein Bediener oder ein Techniker auf einen unerwünschten Betriebszustand hingewiesen werden. Diese bevorzugte Weiterbildung bietet den Vorteil, dass ein Zug mit diesem Radsatz zur Überprüfung des Radsatzes ggf. nicht anzuhalten braucht, wenn der Zug die stationäre Empfangsvorrichtung passiert. Diese bevorzugte Weiterbildung ist mit der ersten und/oder der zweiten bevorzugten Weiterbildung kombinierbar.

Eine vierte bevorzugte Weiterbildung des Verfahrens ist gekennzeichnet durch Schritt S28, wobei vorzugsweise dieser Schritt ereignisgesteuert durchgeführt wird. Vorzugsweise handelt es sich bei der Empfangsvorrichtung wieder um eine stationäre Empfangsvorrichtung. Diese bevorzugte Weiterbildung bietet den Vorteil, dass Wartungspersonal oder ein Techniker Betriebsdaten oder Betriebsparameter auslesen und für ihre Tätigkeit verwenden können und dass ein Zug mit diesem Radsatz zur Überprüfung des Radsatzes ggf. nicht anzuhalten braucht, wenn der Zug die stationäre Empfangsvorrichtung passiert. Diese bevorzugte Weiterbildung ist mit der ersten, zweiten und/oder der dritten bevorzugten Weiterbildung kombinierbar.

Erfindungsgemäß wird einer dieser Radsätze oder ein nach einem dieser Verfahren hergestellten Radsätze für ein Fahrzeug, insbesondere für ein Schienenfahrzeug, verwendet. Dabei ist der Radsatz vorzugsweise drehbeweglich bezüglich des Fahrzeugs gelagert. Vorzugsweise ist das Schienenfahrzeug mit Geschwindigkeiten von über 100 km/h, besonders bevorzugt von über 200 km/h, im Zugverkehr einsetzbar. Die Erfindung ist also besonders bevorzugt in einem Hochgeschwindigkeitszug einsetzbar.

Weitere Vorteile, Merkmale und Anwendungsmöglichkeiten der vorliegenden Erfindung ergeben sich aus der nachfolgenden Beschreibung im Zusammenhang mit den Figuren. Es zeigen:

Fig. 1   schematisch einen erfindungsgemäßen Wellenkörper mit einem Last-kopplungsabschnitt, einem Längsabschnitt und einem Übergangsbereich, auch im Schnitt und perspektivisch dargestellt,

Fig. 2   schematisch einen Wellenkörper mit zwei Lastkopplungsabschnitten mit demselben zweiten Außendurchmesser, einem Längsabschnitt und zwei Übergangsbereichen, auch im Schnitt und perspektivisch dargestellt,

Fig. 3   schematisch einen Wellenkörper mit zwei Lastkopplungsabschnitten, wobei die beiden Lastkopplungsabschnitte unterschiedliche Außendurchmesser aufweisen, mit einem Längsabschnitt und zwei Übergangsbereichen, auch im Schnitt und perspektivisch dargestellt,

Fig. 4   schematisch einen Wellenkörper mit vier Lastkopplungsabschnitten mit demselben zweiten Außendurchmesser, mit mehreren Längsabschnitten und mit mehreren Übergangsbereichen, auch im Schnitt und perspektivisch dargestellt,

Fig. 5   schematisch einen Wellenkörper mit sieben Lastkopplungsabschnitten, welche als Bund ausgebildet sind, mit Längsabschnitten, auch im Schnitt und perspektivisch dargestellt,

Fig. 6   schematisch einen Radsatz mit mehreren Wellenkörpern gemäß Fig. 2 bzw. Fig. 3, mit mehreren Funktionsbauteilen und mit zwei kraftschlüssig verbundenen Rädern, auch im Schnitt und perspektivisch dargestellt,

Fig. 7   schematisch eine weitere Ausführungsform eines Radsatzes mit mehreren Wellenkörpern, mehreren Funktionsbauteilen und zwei stoffschlüssig verbundenen Rädern, auch im Schnitt und perspektivisch dargestellt,

Fig. 8   schematisch eine weitere Ausführungsform eines Radsatzes mit nur einem Wellenkörper gemäß Fig. 5, mit mehreren Lastkopplungsabschnitten, mehreren Funktionsbauteilen und zwei Rädern, auch im Schnitt und perspektivisch dargestellt,

Fig. 9   schematisch zwei Körperwandungen mit verschiedenem Schichtaufbau im Schnitt

Fig. 10 eine perspektivische Darstellung eines Wellenkörpers mit einer Körperwandung mit einer größeren Anzahl von Schichten,

Fig. 11 eine Detail-Schnittdarstellung der Körperwandung des Wellenkörpers gemäß Fig. 10 mit Darstellung der Faserwinkel in den einzelnen Tragschichten.

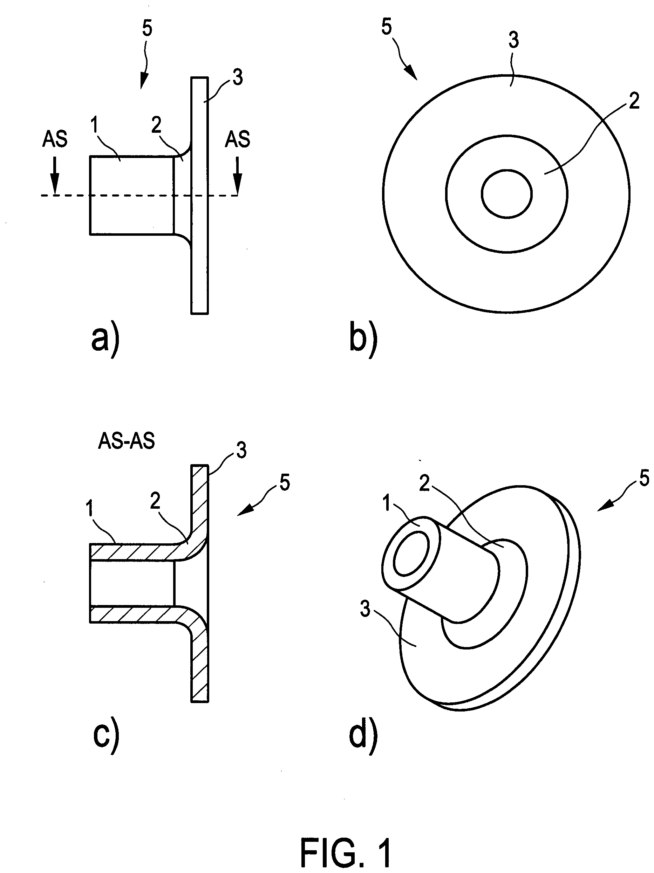

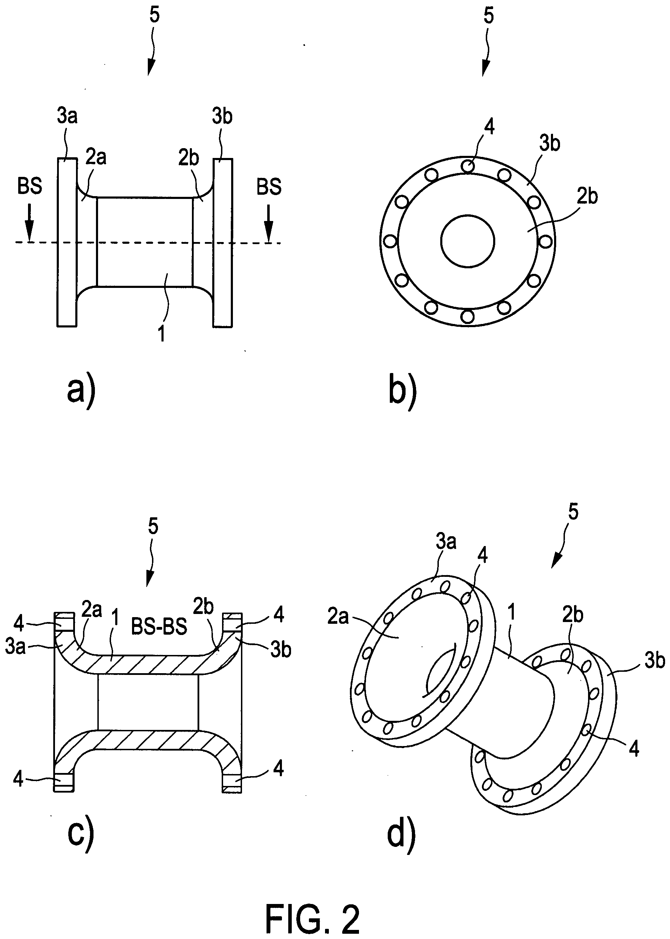

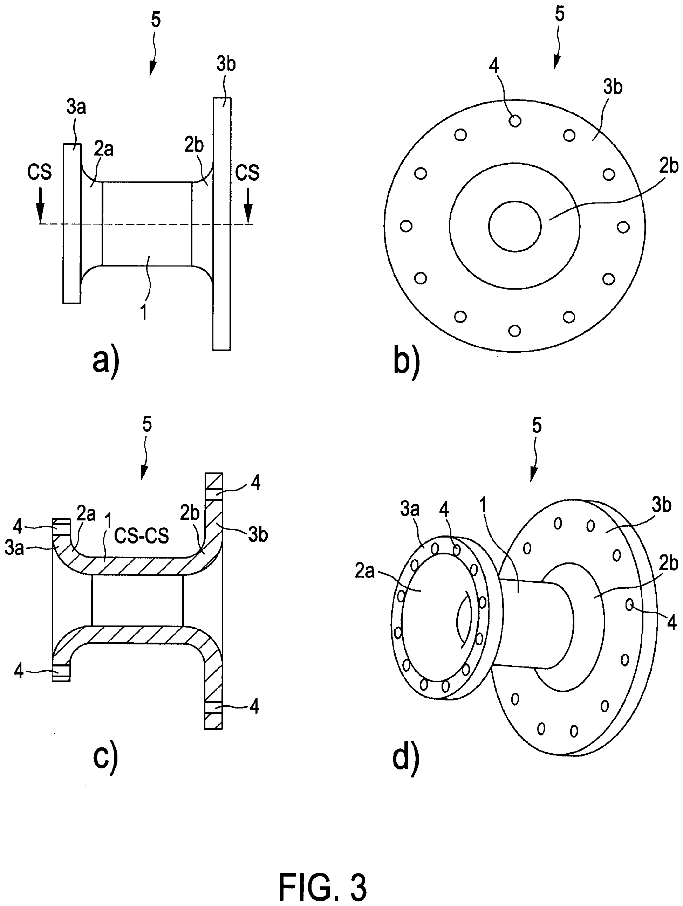

Fig.1 zeigt schematisch einen erfindungsgemäßen Wellenkörper 5 mit einem Lastkopplungsabschnitt 3, einem Längsabschnitt 1 und einem Übergangsbereich 2, und zwar in Fig. 1a) von der Seite (parallel zur Längsachse), in Fig. 1b) von der rechten Stirnseite aus, in Fig. 1c) im Längsschnitt (AS-AS) und in Fig. 1d) in einer perspektivischen Schrägdarstellung; entsprechende Ansichten für andere erfindungsgemäße Wellenkörper sind in den Fig. 2 und 3 dargestellt.

Die Körperwandung des Wellenkörpers 5 ist aus einem faserverstärkten, aushärtbaren Werkstoff ausgebildet. Die Wandstärke der Körperwandung ist gleichförmig. Der Lastkopplungsabschnitt 3 ist als Flansch ausgebildet. Der Übergangsbereich 2 ist zwischen dem Lastkopplungsabschnitt 3 und dem Längsabschnitt 1 angeordnet.

Fig. 2 zeigt schematisch einen weiteren Wellenkörper 5, welcher im Gegensatz zu dem Wellenkörper gemäß Fig. 1 mit zwei Lastkopplungsabschnitten 3a, 3b und zwei Übergangsbereichen 2a, 2b ausgebildet ist. Die Wandstärke der Körperwandung ist gleichförmig. Die Lastkopplungsabschnitte 3a, 3b weisen denselben zweiten Außendurchmesser auf und sind als Flansche zur Verbindung mit Funktionsbauteilen ausgebildet. Die Flansche weisen je eine Anordnung von Bohrungen 4 parallel zur Längsachse des Wellenkörpers auf, wobei die Bohrungen 4 zwei Lochkreise mit je zwölf Bohrungen 4 mit konstanten Winkelabständen zwischen je zwei benachbarten Bohrungen 4 bilden.

Fig. 3 zeigt schematisch einen weiteren Wellenkörper 5, dessen Lastkopplungsabschnitte 3a, 3b im Gegensatz zu dem Wellenkörper gemäß Fig. 2 unterschiedliche Außendurchmesser aufweisen. Die Wandstärke der Körperwandung ist gleichförmig. Auch diese Lastkopplungsabschnitte 3a, 3b sind als Flansche zur Verbindung mit Funktionsbauteilen oder Rädern ausgebildet. Der erste Lastkopplungsabschnitt 3a ist zur Verbindung mit einer Bremsscheibe vorgesehen. Der zweite Lastkopplungsabschnitt 3b ist zur Verbindung mit einem Rad vorgesehen. Die Flansche weisen je eine Anordnung von Bohrungen 4 parallel zur Längsachse des Wellenkörpers 5 auf, wobei die Bohrungen 4 zwei Lochkreise mit je zwölf Bohrungen 4 mit konstanten Winkelabständen zwischen je zwei benachbarten Bohrungen 4 bilden.

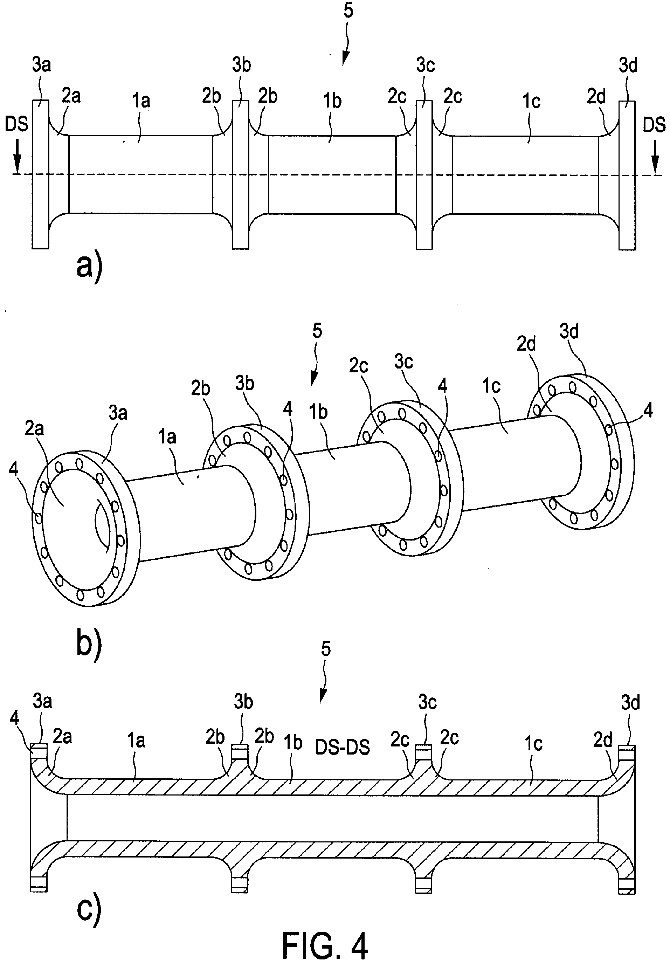

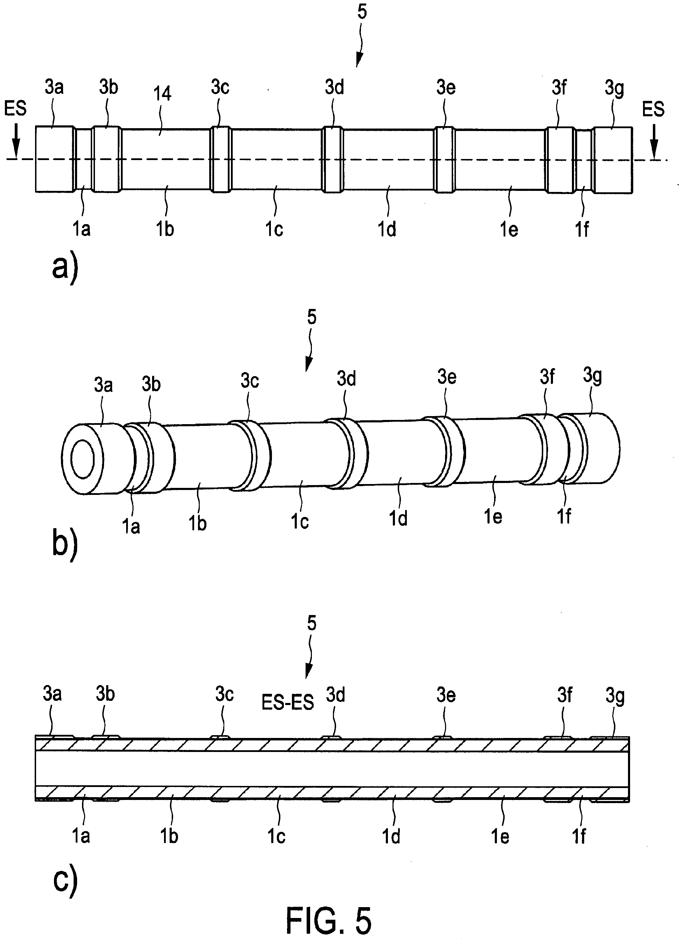

Fig. 4 zeigt schematisch einen Wellenkörper 5 mit vier Lastkopplungsabschnitten 3a, 3b, 3c, 3d mit demselben zweiten Außendurchmesser, mit drei Längsabschnitten 1a, 1b, 1c und mit mehreren Übergangsbereichen 2a, 2b, 2c, 2d, und zwar in Fig. 4a) von der Seite (parallel zur Längsachse), in Fig. 4b) in einer perspektivischen Schrägdarstellung und in Fig. 4c) im Längsschnitt (DS-DS); entsprechende Ansichten für andere erfindungsgemäße Wellenkörper bzw. Radsätze sind in den Fig. 5 bis 8 dargestellt.

Die Wandstärke der Körperwandung des Wellenkörpers 5 ist im Bereich zweier Lastkopplungsabschnitte 3b, 3c größer als in den Längsabschnitten 1a, 1b, 1c.

Diese beiden Lastkopplungsabschnitte 3b, 3c sind zur Verbindung mit je einer Bremsscheibe vorgesehen, während die anderen beiden Lastkopplungsabschnitte 3a, 3d zur Verbindung mit je einem Rad vorgesehen sind. Die Flansche weisen, analog zu den Fig. 1 bis 3, je eine Anordnung von Bohrungen 4 auf.

Fig. 5 zeigt schematisch einen Wellenkörper 5 mit mehreren Lastkopplungsabschnitten 3a - 3g, welche als Bünde ausgebildet sind, und mit Längsabschnitten 1a - 1f. Die Wandstärke der Körperwandung ist in den Lastkopplungsabschnitten 3a - 3g größer als in den Längsabschnitten 1a - 1f.

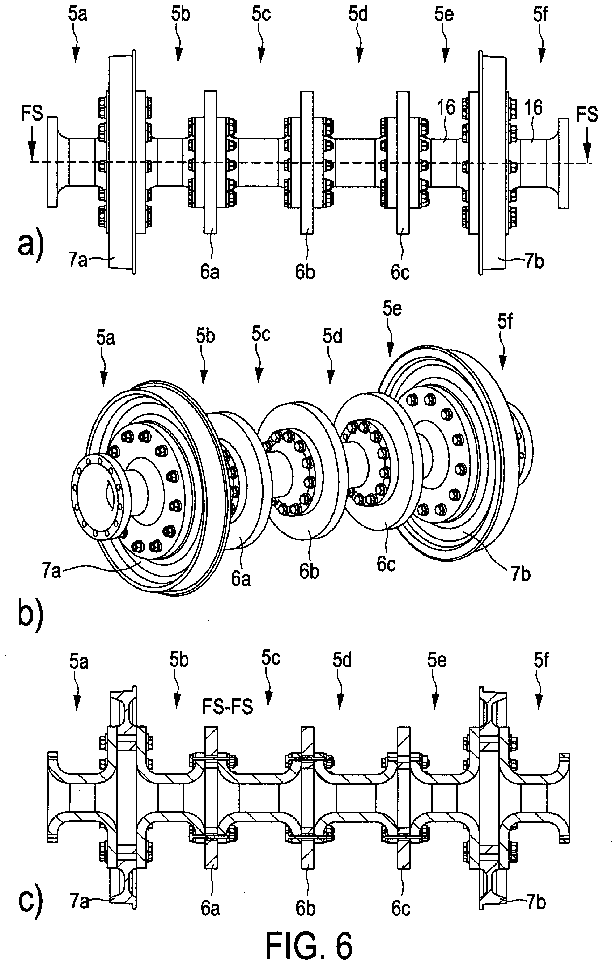

Fig. 6 zeigt schematisch einen Radsatz mit mehreren Wellenkörpern 5a - 5f gemäß Fig. 2 bzw. Fig. 3, mit mehreren Funktionsbauteilen, insbesondere Bremsscheiben, 6a, 6b, 6c und mit zwei kraftschlüssig verbundenen bzw. verschraubten Rädern 7a, 7b. Hierbei sind die Wellenkörper 5c und 5d Wellenkörper gemäß Fig. 2 und die Wellenkörper 5a, 5b, 5e und 5f Wellenkörper gemäß Fig. 3. Diese Funktionsbauteile 6a, 6b, 6c sind kraftschlüssig mit je zwei dieser Wellenkörper 5b/5c, 5c/5d, 5d/5e verbunden bzw. verschraubt. Zur kraftschlüssigen Verbindung mit den Rädern 7a, 7b weisen die entsprechenden Lastkopplungsabschnitte 5a/5b, 5e/5f größere Außendurchmesser auf. Jeder Wellenkörper 5a - 5f weist (entsprechend den Fig. 2 und 3 und daher in Fig. 6 nicht im Einzelnen bezeichnet) einen Längsabschnitt, zwei Lastkopplungsabschnitte und zwei Übergangsbereiche auf.

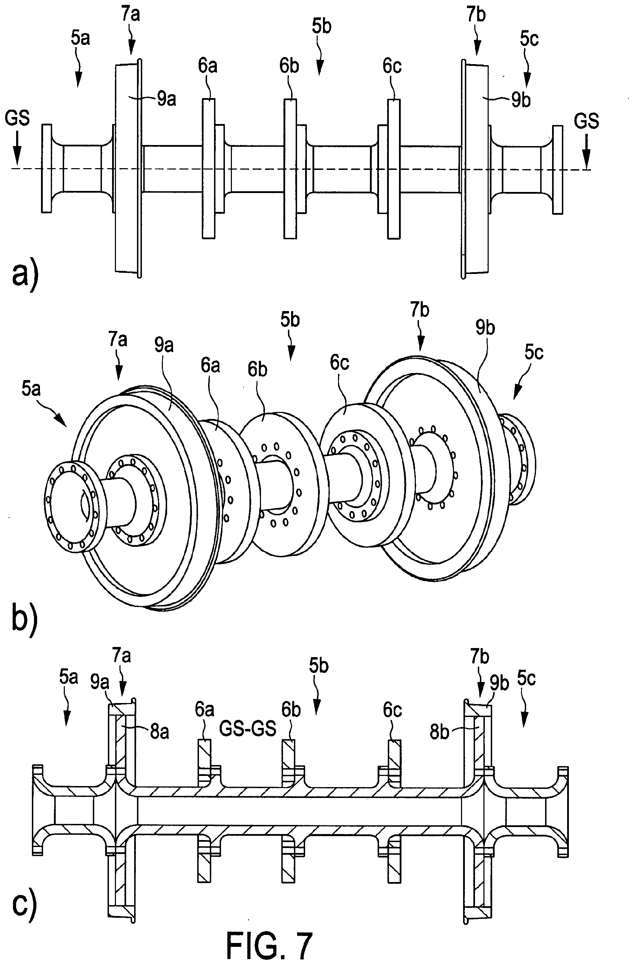

Fig. 7 zeigt schematisch eine weitere Ausführungsform eines Radsatzes mit mehreren Wellenkörpern 5a, 5b, 5c, mehreren Funktionsbauteilen, nämlich Bremsscheiben, 6a, 6b, 6c, und zwei stoffschlüssig verbundenen Rädern 7a, 7b. Die Räder 7a, 7b sind mit Radscheiben 8a, 8b und metallischen Radreifen 9a, 9b ausgebildet. Der Wellenkörper 5b weist insgesamt fünf Lastkopplungsabschnitte auf, während die Wellenkörper 5a und 5c jeweils zwei Lastkopplungsabschnitte (nicht im Einzelnen bezeichnet) aufweisen. Die Radscheiben 8a, 8b sind stoffschlüssig mit den äußeren Lastkopplungsabschnitten des Wellenkörpers 5b verbunden und weisen denselben faserverstärkten, aushärtbaren ersten Werkstoff auf wie die Körperwandung des Wellenkörpers 5b.

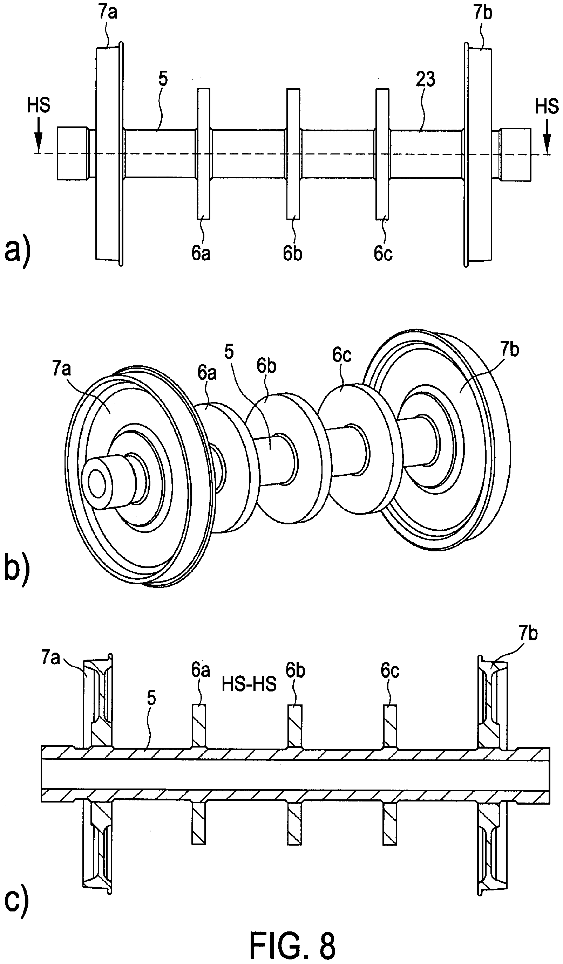

Fig. 8 zeigt schematisch eine weitere Ausführungsform eines Radsatzes mit nur einem Wellenkörper 5 gemäß Fig. 5 mit sieben Lastkopplungsabschnitten (in Fig. 8 nicht im Einzelnen bezeichnet), mit drei Funktionsbauteilen, inbesondere Bremsscheiben, 6a, 6b, 6c, und mit zwei Rädern 7a, 7b.

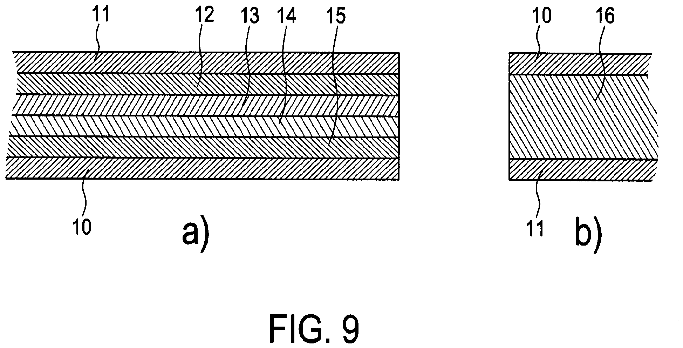

Fig. 9 zeigt einen exemplarischen Aufbau der Körperwandung eines erfindungsgemäßen Wellenkörpers mit sechs etwa gleich dicken Schichten (Fig. 9a)) bzw. drei teilweise unterschiedlich dicken Schichten (Fig. 9b)), insbesondere zur Darstellung der Gliederung des Aufbaus in Funktionsschichten und Tragschichten.

In dem in Fig. 9a) gezeigten Schichtaufbau sind die äußersten Schichten 10, 11 Funktionsschichten, welche beispielsweise Messfühler aufweisen oder aus einem metallischen Werkstoff bestehen und zum Energietransport dienen, und die innen liegenden Schichten 12, 13, 14, 15 sind Tragschichten aus einem ersten Werkstoff, beispielsweise Epoxidharz, in dem Fasern aus einem zweiten Werkstoff, beispielsweise Kohlenstoff, eingebettet sind.

Der in Fig. 9b) gezeigte Schichtaufbau weist wiederum die Funktionsschichten 10, 11, jedoch nur eine, entsprechend dickere, Tragschicht 16 auf, so dass die Gesamtdicke der Körperwandungen in Fig. 9a) und b) etwa gleich ist.

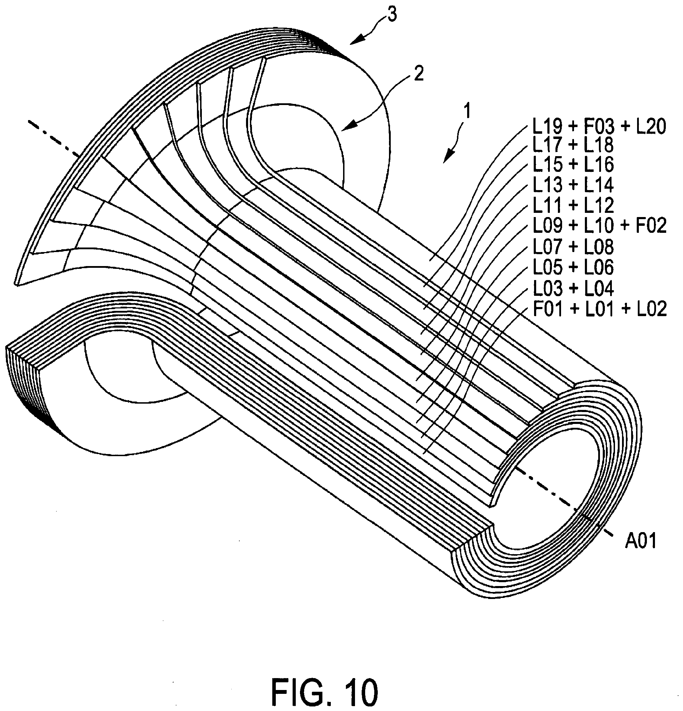

Fig. 10 zeigt schematisch eine perspektivische Darstellung eines Wellenkörpers, welche entlang dessen Längsachse aufgeschnitten wurde und wobei die Schichten stufenförmig angeschnitten dargestellt sind. Der Aufbau des Wellenkörpers entspricht dem in Fig. 1 dargestellten Wellenkörper mit einem Längsabschnitt 1, einem Übergangsbereich 2 und einem Lastkopplungsabschnitt 3.

Der Wellenkörper weist eine Körperwandung mit 23 Schichten auf, nämlich drei Funktionsschichten F01, F02, F03 sowie 20 Tragschichten L01 - L20. Hierbei sind aus Gründen der Übersichtlichkeit in Fig. 10 jeweils zwei Tragschichten oder zwei Tragschichten und eine Funktionsschicht grafisch gemeinsam als eine Schicht dargestellt. Der Wellenkörper ist rotationssymmetrisch bezüglich seiner Längsachse A01.

Die einzelnen Schichten bilden im Bereich des Längsabschnitts 1 konzentrische Zylindermantelflächen um die Längsachse A01, weiten sich im Übergangsbereich 2 nach radial außen auf und verlaufen im Lastkopplungsabschnitt 3 als kreisringförmige Scheiben senkrecht zur Längsachse A01.

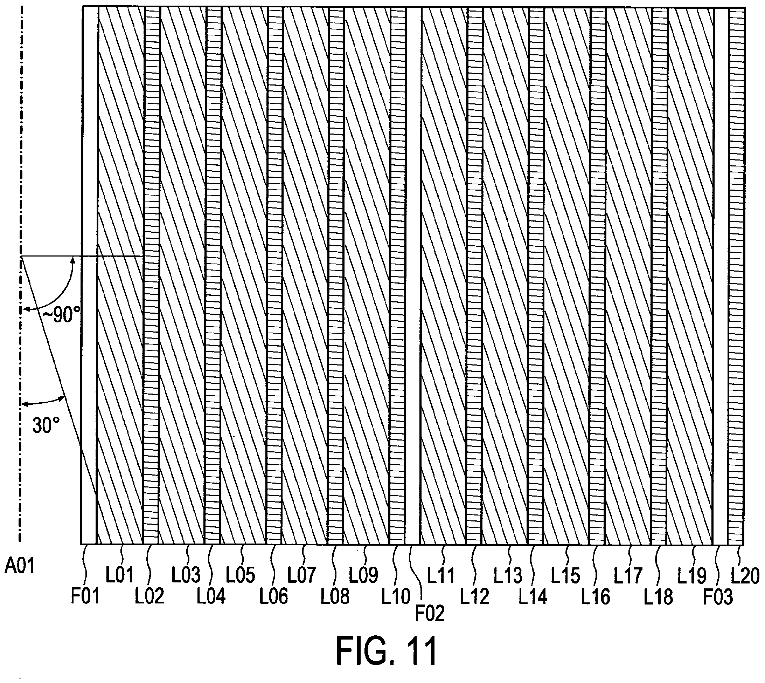

Fig. 11 zeigt schematisch einen nicht maßstabsgerechten Querschnitt durch die Körperwandung des Wellenkörpers gemäß Fig. 10 im Bereich des Längsabschnitts 1, wobei sich die radial innere Seite (Schicht F01) in der Darstellung links und die radial äußere Seite (Schicht L20) in der Darstellung rechts befindet.

Die Funktionsschichten sind (von innen nach außen gesehen) als erste Schicht F01, zwölfte Schicht F02 und 22. Schicht F03 angeordnet. Zwischen den Funktionsschichten F01 und F02 sind zehn Tragschichten L01 - L10 und zwischen den Funktionsschichten F02 und F03 sind neun Tragschichten L11 - L19 angeordnet. Die Funktionsschicht F03 wird von der äußersten Tragschicht L20 bedeckt, welche gleichzeitig eine, insbesondere elastische, Schutzschicht bildet.

Werden die Funktionsschichten F01 - F03 außer Acht gelassen, so besteht die Abfolge von Tragschichten L01 - L20 abwechselnd aus jeweils einer 3,5 mm dicken Schicht L01, L03, ..., L19 mit einem Faserwinkel von 30° sowie jeweils einer 0,5 mm dicken Schicht L02, L04, ..., L20 mit einem Faserwinkel von nahezu 90°.

Die angegebenen Faserwinkel gelten hierbei nur im Bereich des Längsabschnitts 1. Im Übergangsbereich 2 und im Lastkopplungsabschnitt 3 verändert sich die Faserorientierung gemäß dem Satz von Clairaut (gilt für die geodätische Linie, d. h. ohne Berücksichtigung der Reibung) in folgender Weise:

$$\sin \alpha \cdot r = C_c(r, \alpha) = \text{const.},$$

wobei $\alpha$ den Faserwinkel, r den Radius des Wickelkerns und $C_c(r, \alpha)$ die Clairaut-Konstante bezeichnet.

Somit stellt sich beispielsweise bei einem Faserwinkel von 30°, einem Durchmesser $D_1$ des Längsabschnitts 1 von 200 mm und einem Durchmesser $D_2$ des Lastkopplungsabschnitts 3 von 1.000 mm ein Faserwinkel von ca. 5,8° ein. Die Faserorientierung kann durch die "Ausnutzung" der Reibung zwischen Faser und Untergrund in einem Bereich von etwa +/- 15% variiert werden.

Für eine optimierte Gestaltung des Lastkopplungsabschnitts 3 ist jedoch ein Faserwinkel nahe 90° wünschenswert. Hierzu wird der Lastkopplungsabschnitt 3 vorzugsweise unter Einsatz weiterer Faserhalbzeuge etwa in einem Preformingprozess ausgebildet. Dabei können beispielsweise geflochtene Halbzeuge in eine Form drapiert und anschließend mittels einer Metallschmelze infiltriert werden.

Der in Fig. 11 dargestellte Schichtaufbau mit einer Gesamtdicke der Tragschichten von 40 mm zeichnet sich durch einen einfachen Aufbau, eine geringe Rissanfälligkeit und einen hohen Faservolumengehalt aus.

Die Tragschichten L01 - L20 dienen, wie bereits erläutert, der strukturmechanischen Stabilisierung des Wellenkörpers.

Die Funktionsschichten F01 - F03 weisen Funktionselemente auf, die im Wesentlichen keine Tragfunktion haben.

Dies können zum einen Bauelemente zur Zustandsüberwachung ("Online Condition Monitoring") der Tragschichten und der Radsatzwelle bzw. des Radsatzes sein, insbesondere Kupfer-Gewebe ("Mesh"), optische Glasfasern (Bragg-Gitter), piezokeramische Elemente oder röhrenförmige Leitungselemente. Diese Funktionselemente werden elektrisch, optoelektronisch bzw. hydraulisch miteinander verschaltet, um ihre jeweilige Funktion zu erfüllen. Hierbei kann die Energie- bzw. Datenübertragung sowohl leitungsgebunden als auch nichtleitungsgebunden ("wireless") erfolgen.

Bei Funktionsschichten zur Zustandsüberwachung ist es insbesondere auch möglich, dass diese nur partiell auf den Wellenkörper aufgebracht werden, wobei auch die Anordnung innerhalb des Schichtaufbaus problemspezifisch auszuführen ist. So sind piezokeramische Funktionselemente vorzugsweise nur lokal vorhanden und in ihrer Schichtanordnung variabel, erfassen aber dennoch Schwingungen, die durch alle Tragschichten des Bauteils geleitet werden. Hingegen sind Bragg-Gitter vorzugsweise großflächig und als äußere Randlage auf dem Wellenkörper aufgebracht, um eine genügend hohe Dehnung sicherzustellen.

Bei den Funktionsschichten kann es sich zum anderen auch um Schichten handeln, die zum Informations- oder Energietransport dienen. Diese Funktionsschichten werden vorzugsweise als innerste oder als äußerste Schicht angeordnet. Als innerste Schicht dienen sie zusätzlich der effizienten Fertigung, etwa als verlorener Kern. Als äußerste Schicht erfüllen sie zusätzliche Schutzfunktionen, z. B. als Steinschlagschutz. Die genannten Funktionen können auch miteinander kombiniert werden.

Funktionsschichten zum Energietransport dienen insbesondere zur Ableitung des Fahrstroms, welchen das Schienenfahrzeug über eine Oberleitung bezieht, oder der Erdung des Schienenfahrzeugs. Hierfür können die Funktionsschichten als massive Kupferleitungen bzw. Kupferschichten ausgebildet sein, die selbst als röhrenförmige Leitungselemente ausgebildet oder solchen benachbart sind. Durch die röhrenförmige Leitungselemente fließt dann im Betrieb des Schienenfahrzeugs ein Kühlmittel, um die stromleitenden Funktionsschichten zu kühlen.

In der folgenden Tab. 1 sind verschiedene Varianten von Schichtaufbauten eines erfindungsgemäßen Wellenkörpers dargestellt.

Tabelle 1

| Variante | Architektur[1] | Faserwinkel[2] | Vorzugsbelastung | Anmerkungen |
|---|---|---|---|---|
| 1 | Schicht 1: 40 mm | 45° | Torsion | Einfacher Aufbau, Rissanfällig, geringer Faservolumengehalt |
| 2 | Schicht 1: 30 mm Schicht 2: 10 mm | 45° 90° | Torsion und Druck im Verhältnis der Schichtdicken | Einfacher Aufbau, Rissanfällig, hoher Faservolumengehalt |
| 3 | Schicht 1: 30 mm Schicht 2: 5 mm Schicht 3: 5 mm | 45° 0° 90° | Torsion Biegung Druck im Verhältnis der Schichtdicken | Rissanfällig, geringer Faservolumengehalt |
| 4 | Schicht 1: 40 mm | 30° | Torsion und Biegung im Verhältnis 2:1 | Einfacher Aufbau, Rissanfällig, geringer Faservolumengehalt |
| 5 | Schicht 1: 40 mm | 22,5° | Torsion und Biegung im Verhältnis 1:1 | Einfacher Aufbau, Rissanfällig, geringer Faservolumengehalt |
| 6 | Schicht 1: 3,5 mm Schicht 2: 0,5 mm 9 mal wiederholt bis 40 mm Laminatstärke erreicht sind | 30° 90° | Torsion und Biegung Druck | hoher Faservolumengehalt |

In der folgenden Tab. 2 sind weitere Varianten von Schichtaufbauten eines erfindungsgemäßen Wellenkörpers dargestellt, wobei der Schichtaufbau gemäß Fig. 10 und 11 der Variante 3 in Tab. 2 entspricht.

Tabelle 2

| Variante | Architektur[3] | Faserwinkel[4] | Vorzugsbelastung | Anmerkungen |
|---|---|---|---|---|
| 1 | Schicht 1: 22 mm<br>Schicht 2: 2 mm<br>Schicht 3: 14 mm<br>Schicht 4: 2 mm | 45°<br>90°<br>0°<br>90° | Torsion<br>Druck<br>Biegung<br>Druck | einfacher Aufbau, Rissanfällig |
| 2 | Schicht 1: 3,5 mm<br>Schicht 2: 0,5 mm<br>Schicht 3: 3,5 mm<br>Schicht 4: 0,5 mm<br>Schicht 5: 3,5 mm<br>Schicht 6: 0,5 mm<br>Schicht 7: 3,5 mm<br>Schicht 8: 0,5 mm<br>Schicht 9: 3,5 mm<br>Schicht 10: 0,5 mm<br>Schicht 11: 3,5 mm<br>Schicht 12: 0,5 mm<br>Schicht 13: 3,5 mm<br>Schicht 14: 0,5 mm<br>Schicht 15: 3,5 mm<br>Schicht 16: 0,5 mm<br>Schicht 17: 3,5 mm | 45°<br>90°<br>45°<br>90°<br>45°<br>90°<br>45°<br>90°<br>45°<br>90°<br>45°<br>90°<br>0°<br>90°<br>0°<br>90°<br>0° | Torsion<br>Druck<br>Torsion<br>Druck<br>Torsion<br>Druck<br>Torsion<br>Druck<br>Torsion<br>Druck<br>Torsion<br>Druck<br>Biegung<br>Druck<br>Biegung<br>Druck<br>Biegung | kaum Rissaufällig,<br>hoher Faservolumengehalt |
| | Schicht 18: 0,5 mm<br>Schicht 19: 3,5 mm<br>Schicht 20: 0,5 mm | 90°<br>0°<br>90° | Druck<br>Biegung<br>Druck | |
| 3 | Schicht 1: 3,5 mm<br>Schicht 2: 0,5 mm<br>Schicht 3: 3,5 mm<br>Schicht 4: 0,5 mm<br>Schicht 5: 3,5 mm<br>Schicht 6: 0,5 mm<br>Schicht 7: 3,5 mm<br>Schicht 8: 0,5 mm<br>Schicht 9: 3,5 mm<br>Schicht 10: 0,5 mm<br>Schicht 11: 3,5 mm<br>Schicht 12: 0,5 mm<br>Schicht 13: 3,5 mm<br>Schicht 14: 0,5 mm<br>Schicht 15: 3,5 mm<br>Schicht 16: 0,5 mm<br>Schicht 17: 3,5 mm<br>Schicht 18: 0,5 mm<br>Schicht 19: 3,5 mm<br>Schicht 20: 0,5 mm | 30°<br>90°<br>30°<br>90°<br>30°<br>90°<br>30°<br>90°<br>30°<br>90°<br>30°<br>90°<br>30°<br>90°<br>30°<br>90°<br>30°<br>90°<br>30°<br>90° | Torsion<br>Druck<br>Torsion<br>Druck<br>Torsion<br>Druck<br>Torsion<br>Druck<br>Torsion<br>Druck<br>Torsion<br>Druck<br>Biegung<br>Druck<br>Biegung<br>Druck<br>Biegung<br>Druck<br>Biegung<br>Druck | einfacher Aufbau,<br>kaum Rissanfällig,<br>hoher Faservolumengehalt |

**Bezugszeichenliste**

| | |
|---|---|
| 1 | Längsabschnitt |
| 2 | Übergangsbereich |
| 3 | Lastkopplungsabschnitt |
| 4 | Bohrung |
| 5 | Wellenkörper |
| 6 | Funktionsbauteil |
| 7 | Rad |
| 8 | Radscheibe |
| 9 | Radreifen |
| 10, 11 | Funktionsschicht |
| 12 - 16 | Tragschicht |
| F01 - F03 | Funktionsschicht |
| L01 - L20 | Tragschicht |
| A01 | Längsachse des Wellenkörpers |

**Patentansprüche**

1. Radsatzwelle für den Radsatz eines Schienenfahrzeuges, welche wenigstens einen Wellenkörper (5) aufweist, der sich im Wesentlichen entlang einer Längsachse (A01) erstreckt, wobei dieser Wellenkörper (5) wenigstens einen ersten Lastkopplungsabschnitt (3) aufweist, welcher zum Einleiten und/oder Ausleiten einer Kraft und/oder eines Drehmoments in ein bzw. aus einem Funktionsbauteil (6) dient,
wobei dieser Wellenkörper (5) zumindest teilweise aus wenigstens einem ersten Werkstoff besteht, in welchem wenigstens teilweise Fasern aus einem im Wesentlichen nicht-metallischen zweiten Werkstoff zumindest teilweise eingebettet sind,
**dadurch gekennzeichnet,**
**dass** dieser Wellenkörper (5) wenigstens zwei, vorzugsweise wenigstens drei, in unterschiedlichem radialem Abstand zur Längsachse (A01) angeordnete Faserschichten (L01 - L20) aufweist und dass wenigstens zwei Faserschichten (L01 - L20) wenigstens bereichsweise unterschiedliche mechanische Eigenschaften und insbesondere ein unterschiedliches Dehnungsverhalten aufweisen.

2. Radsatzwelle gemäß Anspruch 1,
**dadurch gekennzeichnet,**
**dass** dieser Wellenkörper (5) im wesentlichen rotationssymmetrisch zu seiner Längsachse (A01) gestaltet ist und eine Körperwandung aufweist, welche einen vorzugsweise mit Luft gefüllten Hohlraum umschließt.

3. Radsatzwelle gemäß einem der vorhergehenden Ansprüche,
**dadurch gekennzeichnet,**
**dass** jeder dieser Lastkopplungsabschnitte (3) zur Verbindung mit einem jeweiligen Funktionsbauteil (6) dient, wobei jedes dieser Funktionsbauteile (6) einer Gruppe entnommen ist, die ein Bauteil einer Bremseinrichtung, insbesondere eine Scheibe einer Scheibenbremse, ein Schienenrad (7), ein Radsatzwellenlager oder eine Antriebseinrichtung, insbesondere eine Antriebszahnradeinrichtung, enthält.

4. Radsatzwelle gemäß mindestens einem der vorhergehenden Ansprüche,
**dadurch gekennzeichnet,**
**dass** diese Radsatzwelle wenigstens zwei Wellenkörper (5) aufweist, die in axialer Richtung der Radsatzwelle nebeneinander angeordnet sind.

5. Radsatzwelle gemäß einem der vorhergehenden Ansprüche,
**dadurch gekennzeichnet,**
**dass** der Wellenkörper wenigstens eine Funktionseinrichtung aufweist, welche insbesondere dazu geeignet ist, einen oder mehrere Betriebsparameter dieser Radsatzwelle, zumindest eines dieser Wellenkörper, zumindest eines dieser Räder oder dieses Radsatzes zu erfassen.

**6.** Radsatzwelle gemäß Anspruch 5,
**dadurch gekennzeichnet,**
**dass** diese Funktionseinrichtung ein oder mehrere Funktionselemente aufweist, welche einer Gruppe entnommen sind, welche eine Stromleiteinrichtung, einen Messfühler, eine Steuereinrichtung, eine Datenspeichereinrichtung, eine Energieversorgungseinrichtung und/oder eine, insbesondere leitungsgebundene oder drahtlose, Kommunikationseinrichtung enthält.

**7.** Radsatzwelle gemäß Anspruch 6,
**dadurch gekennzeichnet,**
**dass** dieses Funktionselement ein Messfühler ist und dass dieser Messfühler einer Gruppe entnommen ist, welche eine Kraftmesseinrichtung, eine Druckmesseinrichtung, eine Dehnungsmesseinrichtung, eine Verdrehungswinkelmesseinrichtung, eine Verschiebestreckenmesseinrichtung, eine Drehfrequenzmesseinrichtung, eine Geschwindigkeitsmesseinrichtung, eine optische Messeinrichtung und eine Temperaturmesseinrichtung enthält.

**8.** Radsatzwelle gemäß einem der vorhergehenden Ansprüche,
**dadurch gekennzeichnet,**
**dass** die Fasern dieses Wellenkörpers (5) wenigstens bereichsweise einen Winkel kleiner als 10 Grad, vorzugsweise kleiner als 5 Grad, weiter vorzugsweise von 0 Grad, oder wenigstens bereichsweise einen Winkel zwischen 20 und 40 Grad, vorzugsweise zwischen 25 und 35 Grad, weiter vorzugsweise von 30 Grad, oder wenigstens bereichsweise einen Winkel größer als 80 Grad, vorzugsweise größer als 85 Grad, weiter vorzugsweise von 90 Grad, mit dieser Längsachse (A01) dieses Wellenkörpers (5) einschließen.

**9.** Radsatzwelle gemäß einem der vorhergehenden Ansprüche,
**dadurch gekennzeichnet,**
**dass** wenigstens eine Faserschicht (L01 - L20) derart gestaltet ist, dass sich darin wenigstens eine Faser bei Überschreiten eines bestimmten Schwellwertes der Belastung bleibend verformen und dass wenigstens eine Funktionseinrichtung dafür vorgesehen ist, diese bleibende Verformung zu detektieren.

**10.** Radsatzwelle gemäß einem der vorhergehenden Ansprüche,
**dadurch gekennzeichnet,**
**dass** in jeder Faserschicht (L01 - L20) die Fasern einen bestimmten, innerhalb der Schicht konstanten Faserwinkel aufweisen und dass der Wellenkörper (5) nur Faserschichten (L01 - L20) mit genau zwei verschiedenen Faserwinkeln aufweist.

**11.** Radsatzwelle gemäß einem der vorhergehenden Ansprüche,
**dadurch gekennzeichnet, dass** je zwei Faserschichten (L01 - L20), zwischen denen sich keine weiteren Faserschichten befinden, verschiedene Faserwinkel aufweisen.

**12.** Radsatz für Schienenfahrzeuge, mit einer Radsatzwelle gemäß einem der vorhergehenden Ansprüche.

**13.** Verfahren zum Herstellen einer Radsatzwelle gemäß einem der Ansprüche 1 bis 11 mit den folgenden Schritten:

(S1) Vorbereiten eines Fasermaterials als, insbesondere schlauchförmiges, Geflecht, als Gewebe oder Gelege,
(S2) Anordnen des Fasermaterials um ein, insbesondere rotationssymmetrisches, Formteil, wodurch ein Wellenkörperrohling gebildet wird,
(S3) Anordnen von Fasermaterial im Bereich eines dieser Lastkopplungsabschnitte (3) des späteren Wellenkörpers (5) zur bereichsweisen Erhöhung der Wandstärke der Körperwandung,
(S4) Anordnen wenigstens einer Funktionseinrichtung, wenigstens eines metallischen oder nicht-metallischen Formteiles und/oder wenigstens eines insbesondere metallischen Einlegebauteils in oder an dem Wellenkörperrohling,
(S5) Zugeben eines, insbesondere aushärtbaren, ersten Werkstoffs zu dem Fasermaterial,
(S6) Aushärten des ersten Werkstoffs, insbesondere mittels Erhöhen der Temperatur des ersten Werkstoffs,
(S7) Anbringen einer Beschichtung auf einen Bereich des Wellenkörpers (5),

**14.** Verfahren zum Überwachen eines Radsatzes gemäß Anspruch 12 oder einer Radsatzwelle gemäß einem der Ansprüche 1 bis 11,
**dadurch gekennzeichnet,**
**dass** wenigstens eine Steuereinrichtung sowie eine Datenspeichereinrichtung, eine Energieversorgungseinrichtung, wenigstens ein Messfühler zur Erfassung wenigstens eines Betriebsparameters und eine Kommunikationseinrichtung, welche jeweils mit der Steuereinrichtung signalverbunden sind, vorgesehen sind, weiterhin **gekennzeichnet durch** folgende Schritte:

(S21) Zuführen von Energie zu dieser Steuereinrichtung durch diese Energieversorgungseinrichtung, insbesondere drahtlos, insbesondere durch Induktion,

(S22) Erfassen zumindest eines Messwertes für einen Betriebsparameter dieser Radsatzwelle durch einen Messfühler, insbesondere auf Veranlassung durch die Steuereinrichtung,

(S23) Bereitstellen des zumindest einen Messwertes durch den Messfühler an diese Steuereinrichtung,

(S24) Auswerten dieses zumindest einen Messwertes durch diese Steuereinrichtung, wodurch wenigstens ein Wert für diesen Betriebsparameter gewonnen wird,

(S25) Abspeichern dieses zumindest einen Messwertes in dieser Datenspeichereinrichtung, insbesondere gemeinsam mit einem Wert, welcher repräsentativ für den Zeitpunkt der Erfassung des Messwertes ist,

(S26) Übermitteln dieses zumindest einen Wertes durch diese Kommunikationseinrichtung an einen Empfänger außerhalb des Radsatzes, insbesondere auf Veranlassung dieses Empfängers,

(S27) Übermitteln eines vorbestimmten ersten Signals, welches insbesondere auf einen unerwünschten Wert für diesen Betriebsparameter hinweist, durch diese Kommunikationseinrichtung, insbesondere auf Veranlassung der Steuereinrichtung, insbesondere an einen Empfänger außerhalb des Radsatzes,

(S28) Übermitteln von Betriebsdaten und/oder Werten für Betriebsparameter durch diese Kommunikationseinrichtung, insbesondere auf Veranlassung durch die Steuereinrichtung oder auf Veranlassung eines Empfängers außerhalb des Radsatzes, an diesen Empfänger.

**15.** Verwendung einer Radsatzwelle gemäß einem der Ansprüche 1 bis 11 oder eines Radsatzes gemäß Anspruch 12 oder einer Radsatzwelle hergestellt gemäß Anspruch 13, für ein Schienenfahrzeug, insbesondere für ein Schienenfahrzeug, welches mit Geschwindigkeiten von über 100 km/h, besonders bevorzugt von über 200 km/h, im Zugverkehr einsetzbar ist.

## Claims

**1.** A wheel set shaft for the wheel set of a rail vehicle, which comprises at least one shaft body (5), which extends essentially along a longitudinal axis (A01), wherein this shaft body (5) comprises at least one first load coupling section (3), which serves for guiding of a force and/or a torque in and/or out of a functional component (6), wherein this shaft body (5) consists at least partially of a first material, in which fibers made of an essentially non-metallic second material are at least partially embedded,
**characterized in that**
this shaft body (5) comprises at least two, preferably at least three, fibre layers (L01 - L20) arranged in different radial distances to the longitudinal axis (A01) and that at least two fibre layers (L01 - L20) comprise different mechanical properties at least area by area and in particular a different stretching ability.

**2.** The wheel set shaft according to claim 1,
**characterized in that**
this shaft body (5) is designed essentially rotationally symmetric to the longitudinal axis (A01) and comprises a body wall, which encloses a cavity preferably filled with air.

**3.** The wheel set shaft according to one of the preceding claims,
**characterized in that**
each of these load coupling sections (3) serves for the connection with a respective functional component (6), wherein each of these functional components (6) are taken from a group, which comprises a component of a braking device, in particular a disc of a brake disc, a track wheel (7), a wheel set shaft bearing or a driving device, in particular a driving toothed wheel device.

**4.** The wheel set shaft according to at least one of the preceding claims,
**characterized in that**
this wheel set shaft comprises at least two shaft bodies (5), which are arranged side by side in axial direction of the wheel set shaft.

**5.** The wheel set shaft according to one of the preceding claims,

**characterized in that**
the shaft body comprises at least one functional device, which is preferably suitable to measure one or more operational parameters of this wheel set shaft, at least one of these shaft bodies, at least one of these wheels or these wheel sets.

6. The wheel set shaft according to claim 5,
**characterized in that**
this functional device comprises one or more functional elements, which are taken from a group which comprises a conductor device, a sensor, a control device, a data storage device, an energy supply device and/or a, in particular wired or wireless, communication device.

7. The wheel set shaft according to claim 6,
**characterized in that**
this functional device is a sensor and that this sensor is taken from a group, which comprises a force measuring device, a pressure measuring device, a strain gauge device, a twisting angle measuring device, a relocation measuring device, a rotational frequency measuring device, a speed measuring device, an optical measuring device and a temperature measuring device.

8. The wheel set shaft according to one of the preceding claims,
**characterized in that**
the fibers of the shaft body (5) include at least an angle less than 10 degrees area by area, preferably less than 5 degrees, more preferably of 0 degrees, or at least an angle between 20 and 40 degrees area by area, preferably between 25 and 35 degrees, more preferably of 30 degrees, or at least an angle greater than 80 degrees area by area, preferably greater than 85 degrees, more preferably of 90 degrees, with this longitudinal axis (A01) of this shaft body (5).

9. The wheel set shaft according to one of the preceding claims,
**characterized in that**
at least one fibre layer (L01 - L20) is designed in such a way, that at least one fiber deforms permanently when exceeding a determined threshold value of the load therein and that at least one functional device is designed to detect this permanent deformation.

10. The wheel set shaft according to one of the preceding claims,
**characterized in that**
the fibers in each fibre layer (L01 - L20) comprise a determined fibre angle which is constant within the layer and that the shaft body (5) only comprises fibre layers (L01 - L20) with exact two different fibre angles.

11. The wheel set shaft according to one of the preceding claims,
**characterized in that**
each two fibre layers (L01 - L20), which do not comprise further fibre layers in between, comprise different fibre angles.

12. Wheel set for rail vehicles comprising a wheel set shaft according to one of the preceding claims.

13. Method for manufacturing a wheel set shaft according to one of the claims 1 to 11 comprising the following steps:

(S1) Preparing a fibre material as, in particular tubular, mesh, woven fabric or fabric,
(S2) Arranging of the fibre material around a, in particular rotationally symmetric, molded part, wherein a blank shaft body is built,
(S3) Arranging of fibre material in the area of these load coupling sections (3) of the future shaft body (5) for increasing the wall thickness of the body wall area by area.
(S4) Arranging of at least one functional device, at least one metallic or non-metallic molded part and/or at least on preferably metallic insertion component in or on the blank shaft body,
(S5) Adding a, in particular curable, first material to the fibre material,
(S6) Curing the first material, in particular by raising the temperature of the first material,
(S7) Mounting a coating on an area of the shaft body (5).

14. Method for monitoring a wheel set according to claim 12 or a wheel set shaft according to one of the claims 1 to 11,
**characterized in that**

at least one control device and a data storage device, an energy supply device, at least one sensor for measuring of at least one operational parameter and a communication device, which each is signal-connected with the control device, are provided,

furthermore **characterized in** by following steps:

(S21) Supplying energy to the control device by this energy supply device, in particular wirelessly, in particular by induction,

(S22) Measuring of at least one measuring value for an operational parameter of this wheel set shaft by a sensor, in particular upon the instruction of the control device,

(S23) Providing the at least one measuring value to the control the device by the sensor,

(S24) Evaluating of this at least one measurement value by this control device, wherein at least one value for the operational parameter is obtained,

(S25) Storing this at least one measurement value in this data storage device, in particular together with a value, which is representative for the time of the measurement of the measurement value,

(S26) Transmitting this at least one value to a receiver outside the wheel set by this communication device, in particular upon the instruction of this receiver,

(S27) Transmitting a predetermined first signal, which in particular point to an undesirable value for this operational parameter, by the communication device, in particular upon the instruction of the control device, in particular to a receiver outside the wheel set,

(S28) Transmitting operating data and/or values for operational parameter by this communication device, in particular upon the instruction of the control device or upon the instruction of a receiver outside the wheel set, to this receiver.

15. Use of a wheel set shaft according to one of the claims 1 to 11 or a wheel set according to claim 12 or a wheel set shaft manufactured according to claim 13, for a rail vehicle, in particular for a rail vehicle, which is employable at velocities of above 100 km/h, particularly preferred above 200 km/h, in the rail traffic.


**Revendications**

1. Arbre d'essieu monté destiné à l'essieu monté d'un véhicule sur rails, lequel présente au moins un corps d'arbre (5), qui s'étend sensiblement le long d'un axe longitudinal (A01), dans lequel ledit corps d'arbre (5) présente au moins une première section de couplage de charge (3), qui sert à introduire et/ou à évacuer une force et/ou un couple de rotation dans un d'un composant fonctionnel (6) ou hors de celui-ci,

   dans lequel ledit corps d'arbre (5) est constitué au moins en partie d'au moins un premier matériau, dans lequel au moins en partie des fibres issues d'un deuxième matériau sensiblement non métallique sont au moins en partie intégrées,

   **caractérisé en ce**

   **que** ledit corps d'arbre (5) présente au moins deux, de préférence au moins trois, couches de fibres (L0I - L20) disposées à une distance radiale distincte par rapport à l'axe longitudinal (A01), et qu'au moins deux couches de fibres (L0I - L20) présentent au moins par endroits des propriétés mécaniques distinctes et en particulier un comportement d'allongement distinct.

2. Arbre d'essieu monté selon la revendication 1,

   **caractérisé en ce**

   **que** ledit corps d'arbre (5) est configuré sensiblement de manière symétrique en rotation par rapport à son axe longitudinal (A01) et présente une paroi de corps, qui renferme un espace creux rempli de préférence d'air.

3. Arbre d'essieu monté selon l'une quelconque des revendications précédentes,

   **caractérisé en ce**

   **que** chacune desdites sections de couplage de force (3) se destine à être reliée à un composant fonctionnel (6) respectif, dans lequel chacun desdits composants fonctionnels (6) est extrait d'un groupe, qui contient un composant d'un système de freinage, en particulier un disque d'un frein à disque, une roue pour rail (7), un palier d'arbre d'essieu monté ou un système d'entraînement, en particulier un système de roue dentée d'entraînement.

4. Arbre d'essieu monté selon au moins l'une quelconque des revendications précédentes,

   **caractérisé en ce**

   **que** ledit arbre d'essieu monté présente au moins deux corps d'arbre (5), qui sont disposés de manière juxtaposée dans une direction axiale de l'arbre d'essieu monté.

**5.** Arbre d'essieu monté selon l'une quelconque des revendications précédentes,
**caractérisé en ce**
**que** le corps d'arbre présente au moins un système fonctionnel, qui est adapté en particulier pour détecter un ou plusieurs paramètres de fonctionnement dudit arbre d'essieu monté, au moins d'un desdits corps d'arbre, au moins d'une desdites roues ou dudit essieu monté.

**6.** Arbre d'essieu monté selon la revendication 5,
**caractérisé en ce**
**que** ledit système fonctionnel présente un ou plusieurs éléments fonctionnels, qui sont extraits d'un groupe, qui contient un système d'acheminement de courant, une sonde de mesure, un système de commande, un système de stockage de données, un système d'alimentation en énergie et/ou un système de communication en particulier filaire ou sans fil.

**7.** Arbre d'essieu monté selon la revendication 6,
**caractérisé en ce**
**que** ledit élément fonctionnel est une sonde de mesure, et que ladite sonde de mesure est extraite d'un groupe, qui contient un système de mesure de force, un système de mesure de pression, un système de mesure d'allongement, un système de mesure d'angle de rotation, un système de mesure de trajet de coulissement, un système de mesure de fréquence de rotation, un système de mesure de vitesse, un système de mesure optique et un système de mesure de température.

**8.** Arbre d'essieu monté selon l'une quelconque des revendications précédentes,
**caractérisé en ce**
**que** les fibres dudit corps d'arbre (5) forment avec ledit axe longitudinal (A01) dudit corps d'arbre (5) au moins par endroits un angle inférieur à 10 degrés, de préférence inférieur à 5 degrés, de préférence encore un angle de 0 degré, ou au moins par endroits un angle compris entre 20 et 40 degrés, de préférence compris entre 25 et 35 degrés, de préférence encore un angle de 30 degrés, ou au moins par endroits un angle supérieur à 80 degrés, de préférence supérieur à 85 degrés, de préférence encore un angle de 90 degrés.

**9.** Arbre d'essieu monté selon l'une quelconque des revendications précédentes,
**caractérisé en ce**
**qu'**au moins une couche de fibres (L0I - L20) est configurée de telle manière qu'au moins une fibre s'y trouvant se déforme de manière permanente en cas de dépassement d'une valeur de seuil définie de la contrainte, et qu'au moins un système fonctionnel est prévu pour détecter ladite déformation permanente.

**10.** Arbre d'essieu monté selon l'une quelconque des revendications précédentes,
**caractérisé en ce**
**que** les fibres présentent dans chaque couche de fibres (L0I - L20) un angle de fibres défini constant à l'intérieur de la couche, et que le corps d'arbre (5) ne présente que des couches de fibres (L0I - L20) avec précisément deux angles de fibre différents.

**11.** Arbre d'essieu monté selon l'une quelconque des revendications précédentes,
**caractérisé en ce**
**que** respectivement deux couches de fibres (L0I - L20), entre lesquelles ne se trouve aucune autre couche de fibres, présentent des angles de fibre différents.

**12.** Essieu monté destiné à des véhicules sur rails, comprenant un arbre d'essieu monté selon l'une quelconque des revendications précédentes.

**13.** Procédé servant à fabriquer un arbre d'essieu monté selon l'une quelconque des revendications 1 à 11, comprenant les étapes suivantes consistant à :

(E1) préparer un matériau à base de fibres sous la forme d'un tissage en particulier de forme tubulaire, d'un tissu ou d'une nappe ;
(E2) disposer le matériau à base de fibres autour d'une pièce moulée, en particulier symétrique en rotation, ce qui permet de former une ébauche de corps d'arbre ;

(E3) disposer du matériau à base de fibres dans la zone d'une desdites sections de couplage de charge (3) du corps d'arbre (5) ultérieur afin d'augmenter par endroits l'épaisseur de la paroi de corps ;

(E4) disposer au moins un système fonctionnel, au moins une pièce moulée métallique ou non métallique, et/ou au moins un composant d'insertion en particulier métallique dans ou au niveau de l'ébauche de corps d'arbre ;

(E5) ajouter un premier matériau, en particulier durcissable, au matériau à base de fibres ;

(E6) faire durcir le premier matériau, en particulier en augmentant la température du premier matériau ;

(E7) appliquer un revêtement sur une zone du corps d'arbre (5).

14. Procédé servant à surveiller un essieu monté selon la revendication 12 ou un arbre d'essieu monté selon l'une quelconque des revendications 1 à 11,

**caractérisé en ce**

**que** sont prévus au moins un système de commande ainsi qu'un système de stockage de données, un système d'alimentation en énergie, au moins une sonde de mesure servant à détecter au moins un paramètre de fonctionnement et un système de communication, qui sont reliés par signaux respectivement au système de commande, **caractérisé par** ailleurs par les étapes qui suivent consistant à :

(E21) faire amener de l'énergie audit système de commande par ledit système d'alimentation en énergie, en particulier sans fil, en particulier par induction ;

(E22) faire détecter au moins une valeur de mesure pour un paramètre de fonctionnement dudit arbre d'essieu monté par une sonde de mesure, en particulier à la demande du système de commande ;

(E23) faire fournir audit système de commande l'au moins une valeur de mesure par la sonde de mesure ;

(E24) faire évaluer ladite au moins une valeur de mesure par ledit système de commande, ce qui permet d'obtenir au moins une valeur pour ledit paramètre de fonctionnement ;

(E25) sauvegarder ladite au moins une valeur de mesure dans ledit système de stockage de données, en particulier conjointement avec une valeur, qui est représentative du moment de la détection de la valeur de mesure ;

(E26) faire transférer ladite au moins une valeur par ledit système de communication à un récepteur à l'extérieur de l'essieu monté, en particulier à la demande dudit récepteur ;

(E27) faire transférer un premier signal prédéfini, qui souligne en particulier une valeur non souhaitée pour ledit paramètre de fonctionnement, par ledit système de communication, en particulier à la demande du système de commande, en particulier à un récepteur à l'extérieur de l'essieu monté ;

(E28) faire transférer des données de fonctionnement et/ou des valeurs pour des paramètres de fonctionnement par ledit système de communication, en particulier à la demande du système de commande ou à la demande d'un récepteur à l'extérieur de l'essieu monté, audit récepteur.

15. Utilisation d'un arbre d'essieu monté selon l'une quelconque des revendications 1 à 11 ou d'un essieu monté selon la revendication 12 ou d'un arbre d'essieu monté fabriqué selon la revendication 13, pour un véhicule sur rails, en particulier pour un véhicule sur rails, qui peut être utilisé à des vitesses supérieures à 100 km/h, de manière particulièrement préférée supérieures à 200 km/h dans les services ferroviaires.

FIG. 1

5

5

3a 2a 2b 3b

BS

BS

1

a)

4 3b

2b

b)

5

5

4 2a 1 BS-BS 2b 4

3a 3b

4 4

c)

3a 4

2a 1 2b

4

3b

4

d)

FIG. 2

FIG. 3

FIG. 4

FIG. 5

FIG. 6

FIG. 7

7a                                                    7b

5                              23

HS                                                    HS

a)                6a        6b        6c

7a        6a    5    6b        6c              7b

b)

7a        6a    HS-HS    6b        6c              7b

5

c)

# FIG. 8

FIG. 9

L19 + F03 + L20
L17 + L18
L15 + L16
L13 + L14
L11 + L12
L09 + L10 + F02
L07 + L08
L05 + L06
L03 + L04
F01 + L01 + L02

A01

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004033432
- DE 10200600154083
- DE 102009053801
- JP S57209402 A